# EUROPEAN PATENT SPECIFICATION

(11) **EP 4 548 568 B1**
(45) Date of publication and mention of the grant of the patent: **02.12.2026**
(21) Application number: 23832543.5
(22) Date of filing: 28.06.2023
(51) Int. Cl.: H04M 3/42, H04M 1/2757

(54) **USE OF GLOBAL DIALING FORMAT FOR CONTACT SHARING AND TEXT MESSAGING**
VERWENDUNG EINES GLOBALEN WÄHLFORMATS ZUR GEMEINSAMEN KONTAKTNUTZUNG UND TEXTNACHRICHTENÜBERMITTLUNG
UTILISATION D'UN FORMAT DE NUMÉROTATION MONDIAL POUR LE PARTAGE DE CONTACTS ET LA MESSAGERIE TEXTUELLE

(30) Priority: 30.06.2022 US 202217854178
(43) Date of publication of application: 07.05.2025
(73) Proprietor: Ojesina, Victor, Tokunbo, Houston, TX 77086 (US)
(72) Inventor: Ojesina, Victor, Tokunbo, Houston, TX 77086 (US)
(74) Representative: Potter Clarkson
(86) International application number: PCT/US2023/069254
(87) International publication number: WO 2024/006825

(56) References cited:
- US-A1- 2015 296 081
- US-A1- 2018 034 805
- US-A1- 2020 014 783
- US-A1- 2021 099 576
- US-B1- 7 079 643

## Description

### TECHNICAL FIELD

The present disclosure relates generally to a global dialing format for storing domestic and international phone numbers and placing phone calls or sending texts to the stored numbers. More specifically, the present techniques relate to converting a phone number to the global dialing format and calling or texting the reformatted phone number.

### BACKGROUND ART

There are multiple standards and conventions that govern the formatting of a phone number to be called or texted. A user of a communication device must be familiar with these standards and conventions for countries throughout the world to successfully place calls or send texts to domestic and international phone numbers.

US 7,079,643 B1 discloses a method for automatically determining the dialing sequence that is required for local, local long distance, ten digit local and long distance, long distance, and international dialing from an initial dialing database that contains no information about local telephone company dialing requirements and requires no or minimal human interaction.

### SUMMARY OF INVENTION

A software application retrieves a phone number saved on a communication device. The retrieved phone number is converted to the global dialing format by a reformatting sequence or a manual intervention sequence when the reformatting sequence cannot accomplish the conversion. The global dialing format is a concatenation of an International Organization for Standardization (ISO) country code for a destination country and a local phone number in the destination country. The reformatted phone number is saved to a contacts list on the communication device. Contact information associated with the reformatted phone number is rendered as a quick response (QR) code. A user of the communication device shares the QR code (and the contact information it contains) with another user of a communication device.

The local phone number is retrieved from the reformatted phone number when the user selects the reformatted phone number from the contacts list. A call logic sequence assembles the dialing protocol necessary to call or text the local phone number. An authentication process is executed to verify that the local phone number is an actual phone number in the destination country. If authenticated, the local phone number is concatenated with the dialing protocol assembled by the call logic sequence.

A concatenated phone number is obtained. The local phone number is saved to the communication device in the global dialing format. The concatenated phone number is called or texted.

### BRIEF DESCRIPTION OF THE DRAWINGS

FIG. 1 is a logic flow diagram for converting a phone number to a global dialing format and calling or texting the reformatted phone number.
FIGs. 2A and 2B are logic flow diagrams for determining how a phone number may be entered to initiate a call or a text message.
FIG. 3 is an illustration of a home screen that appears on the user's communication device after launch of a software application that performs the functions disclosed herein.
FIG. 4 is an illustration of a dialer screen on a communication device after a QR code icon has been selected.
FIG. 5 is an illustration of the dialer screen on the communication device after a texting icon has been selected.
FIG. 6 is a logic flow diagram for creating a QR code for contact sharing.
FIG. 7 is a logic flow diagram for importing a QR code.
FIG. 8 is a logic flow diagram for a call logic sequence used to call or text a phone number.
FIGs. 9A - 9C are logic flow diagrams for a domestic call logic sequence.
FIGs. 10A - 10C are logic flow diagrams for an international call logic sequence.
FIG. 11 is a logic flow diagram for an alliance rule logic sequence.
FIGs. 12A and 12B are process flow diagrams of a method for using the global dialing format.

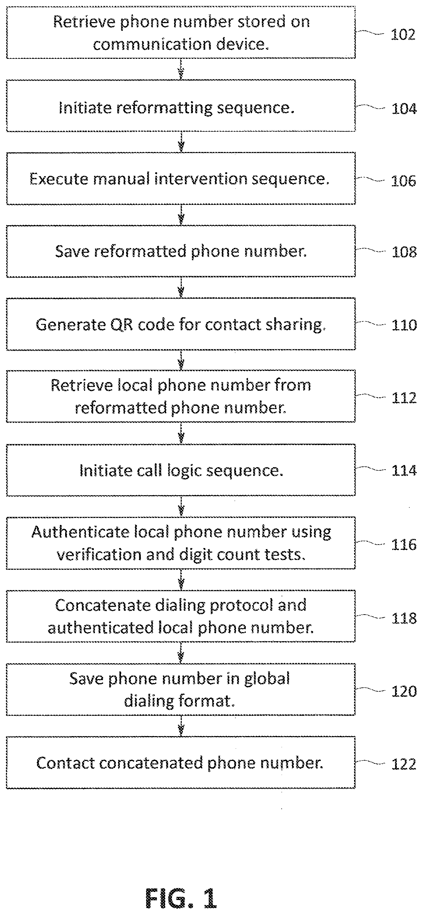

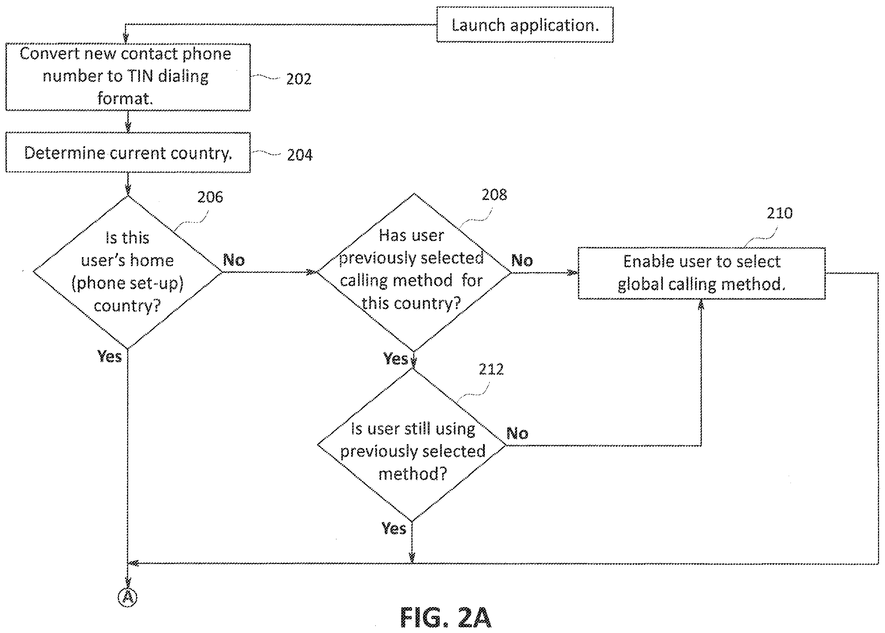

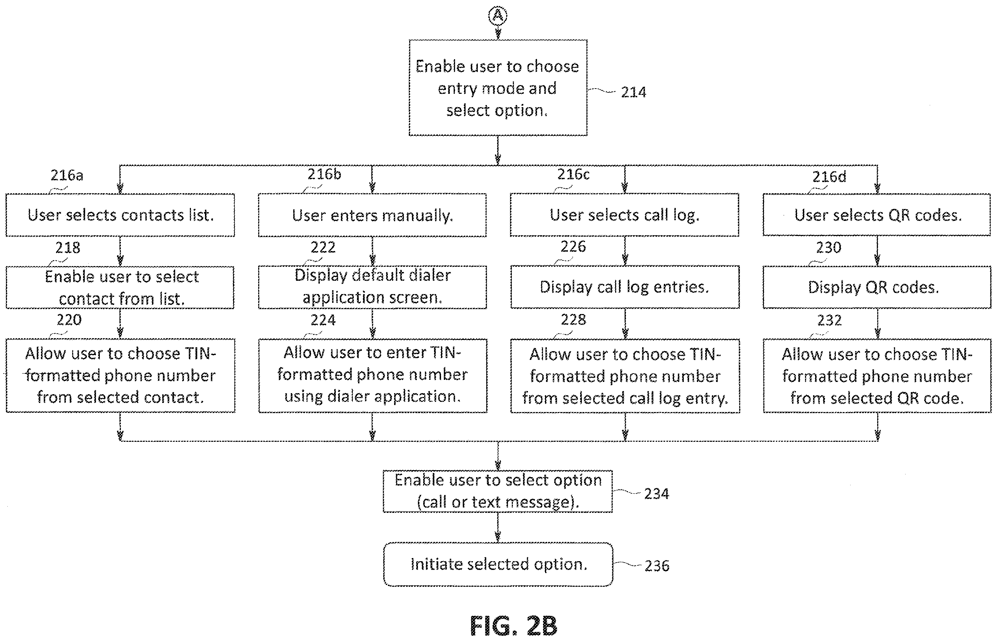

The same numbers are used throughout the disclosure and the figures to reference like features. Numbers in the 100 series refer to features originally found in FIG. 1; numbers in the 200 series refer to features originally found in FIG. 2; and so on.

The logic sequences shown in the logic flow diagrams may be implemented as instructions stored on at least one non-transitory computer-readable medium. These instructions may be read and executed by at least one processor to perform the functions described herein. To facilitate the performance of these functions, the at least one processor may receive user input from the screens illustrated in the figures and may access various databases.

### DESCRIPTION OF EMBODIMENTS

A phone number must be in a certain format if a phone call or text is to reach the intended recipient. However, this format is not necessarily the format in which the phone number is saved on a communication device.

A phone number must contain certain codes and prefixes depending upon the originating and destination countries. For example, a trunk prefix is required in most countries when placing phone calls or sending texts to domestic phone numbers. An exit code for the originating country and an entry code for the destination country are required when placing calls or sending texts to international phone numbers. If any necessary code or prefix is missing, a communication device cannot call or text the phone number without manual intervention. A user has to add the missing code(s) or prefix(es) before the phone number can be called or texted. This requires the user to be familiar with codes and prefixes for multiple countries.

When a global dialing format is used, a communication device saves a phone number in a format that is uniform across countries. A call logic sequence associated with the global dialing format captures codes and prefixes from various databases and concatenates the captured codes and prefixes with the phone number prior to placing a call or sending a text. The global dialing format and related call logic sequence obviate the need for the user to intervene and add any missing codes or prefixes to the phone number.

The subject matter disclosed herein relates to the use of a global dialing format by a communication device. The present disclosure describes a software application that converts a phone number to the global dialing format and saves the reformatted phone number to a contacts list on the communication device. To contact the reformatted phone number, the software application retrieves a local phone number contained in the reformatted phone number, concatenates the local phone number and any necessary dialing codes or prefixes, and calls or texts the concatenated phone number. For example, the software application may retrieve a phone number saved on a communication device. A reformatting sequence may convert the phone number to the global dialing format. A manual intervention sequence may be invoked to convert the phone number when the reformatting sequence cannot accomplish the conversion. The reformatted phone number may be saved to the contacts list on the communication device, whether the reformatted phone number is the result of the reformatting sequence or the manual intervention sequence. A quick response (QR) code may be created from the reformatted phone number to enable contact sharing. To call or text the phone number in the global dialing format, the local phone number may be retrieved from the reformatted phone number. The local phone number may be located in a destination country. A call logic sequence may be initiated. The call logic sequence may assemble the dialing codes and prefixes necessary to place a call or send a text. An authentication sequence may be executed to verify that the local phone number is located in the destination country. The local phone number may be authenticated if it passes a verification test and a digit count test. If authenticated, the local phone number may be concatenated with the dialing codes and prefixes captured during the execution of the call logic sequence. The local phone number is saved on the communication device in the global dialing format. The concatenated phone number may be contacted, i.e., called or texted. Various examples of the execution of the software application are described in detail below. Reference is made to the figures.

FIG. 1 is a logic flow diagram for converting a phone number to a global dialing format and calling or texting the reformatted phone number. The logic begins at block 102, where a software application (app) may retrieve a phone number saved on a communication device. The term "communication device" may include mobile devices such as smart phones, laptops, tablets, and any other transportable electronic devices having sufficient computing capability to implement the embodiments described in the present disclosure. Further, the term "communication device" need not be limited to mobile devices. For example, a desktop computer may be used to implement the embodiments described herein.

At block 104, the reformatting sequence may be initiated. The reformatting sequence may convert the retrieved phone number to the global dialing format. The reformatted phone number may be a concatenation of a standardized country code and a local phone number in the destination country represented by the standardized country code. In an embodiment, the standardized country code may be a three-letter code. In particular, the three-letter code may be the International Organization for Standardization (ISO) country code for the destination country. The term "ISO country code" refers to a unique three-letter code for a country.

The global dialing format of the reformatted phone number may be the Toks ISO-Numeric (TIN) dialing format. The TIN dialing format is the concatenation of the ISO country code for the destination country and the local phone number. For example, a phone number in the United States would be "USA.2811234567" in the TIN format.

The reformatting sequence may by composed of four logic sequences. Each retrieved phone number may be reformatted by one of the sequences. However, the reformatting sequence may be unable to convert a retrieved phone number to the global dialing format. When this occurs, a manual intervention sequence is executed at block 106. The manual intervention sequence may allow a user to intercede and reformat the retrieved phone number. The user may reformat the phone number by interfacing with the app via interactive screens displayed on the communication device.

The reformatted phone number may be saved to a contacts list on the communication device at block 108. The phone number is saved whether it was converted to the global dialing format by the reformatting sequence or the manual intervention sequence. The saved phone number may be called or texted if selected by the user.

At block 110, a QR code may be generated from the reformatted phone number. In particular, contact information associated with the reformatted phone number may be rendered as a QR code. For example, both Apple and Android use a programming language to create QR codes. Apple's mobile operating system iOS uses the Objective-C programming language which includes native functions that generate QR codes. Android's mobile operating system Android OS uses the Android App to generate QR codes by accessing the Google library com.google.zxing.

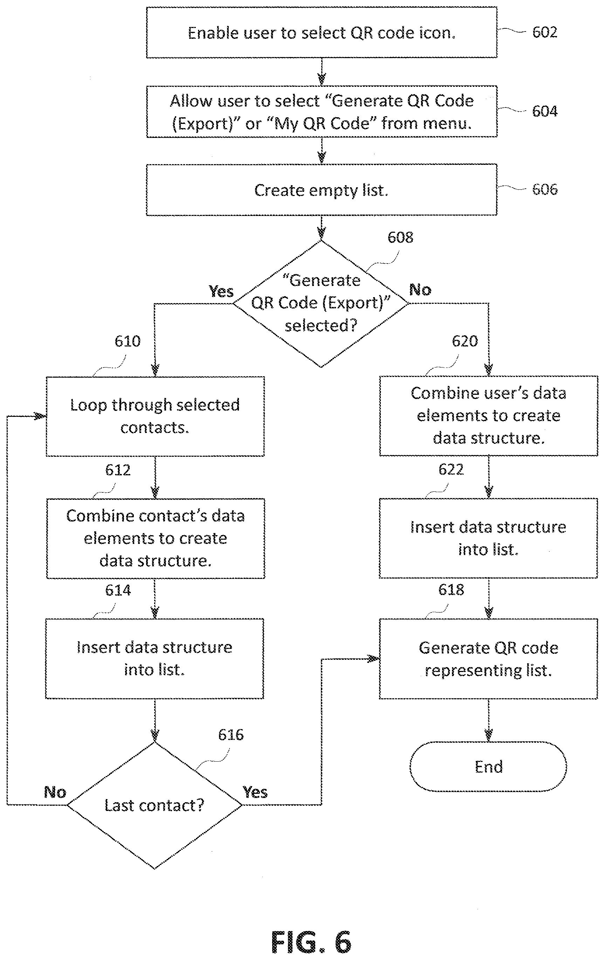

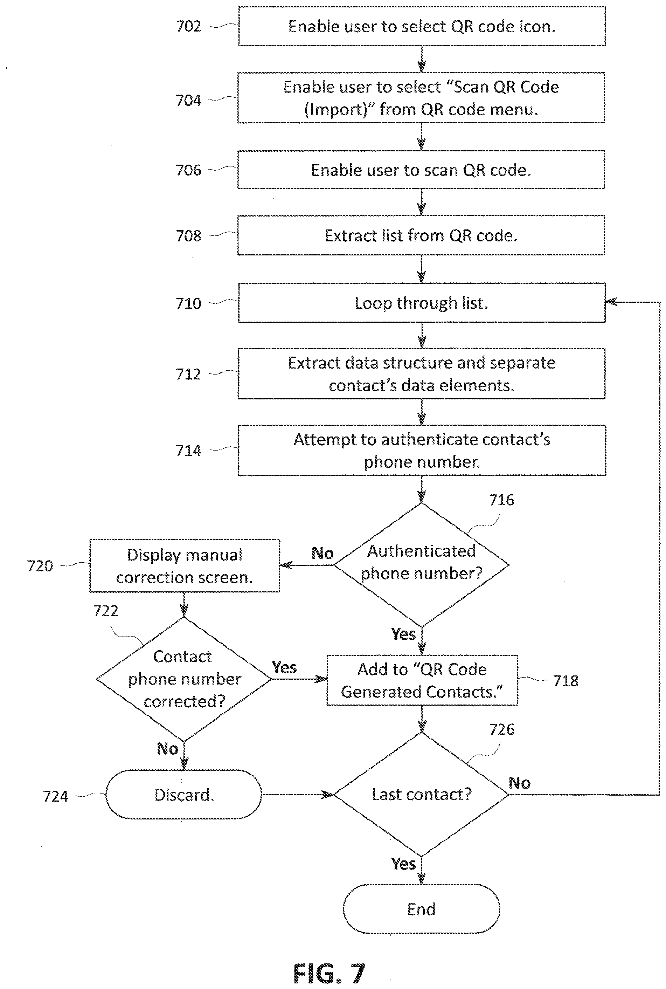

The QR code may be generated for contact sharing. The user may decide to share the QR code (and the contact information it contains) with another user of a communication device. The user accomplishes this type of sharing by exporting the QR code. The export of a QR code is explained in detail with reference to FIG. 6. Sharing of a QR code is not unidirectional; the user may also receive a QR code from another user of a communication device. The user accomplishes this type of sharing by importing the QR code. The import of a QR code is explained in detail with reference to FIG. 7.

At block 112, the local phone number may be retrieved from the reformatted phone number. Block 112 may begin the conversion of the retrieved phone number to a format that can be called or texted. This conversion may be initiated when the user decides to call or text the reformatted number and chooses it from a list of phone numbers stored on his or her communication device.

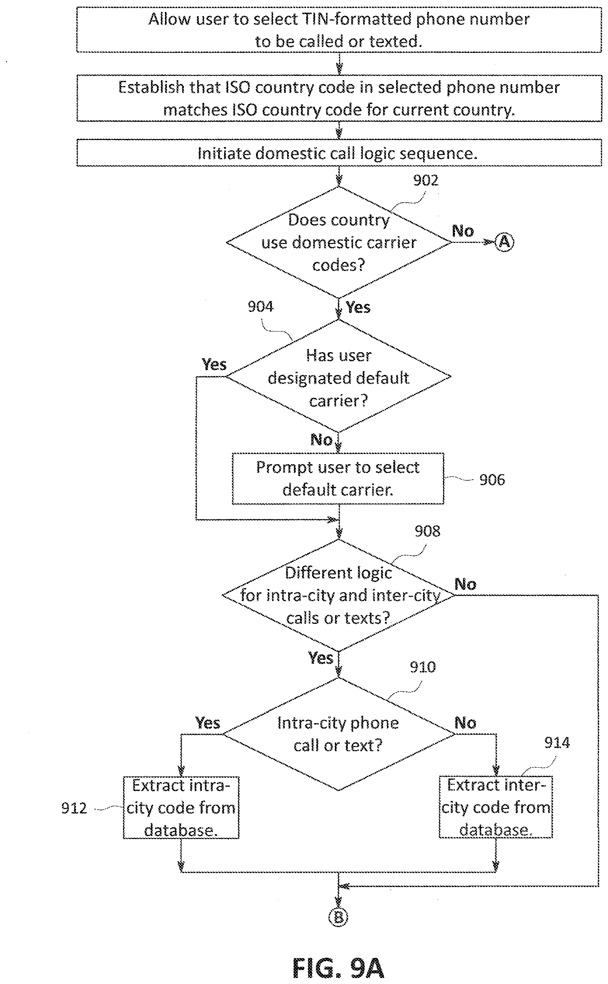

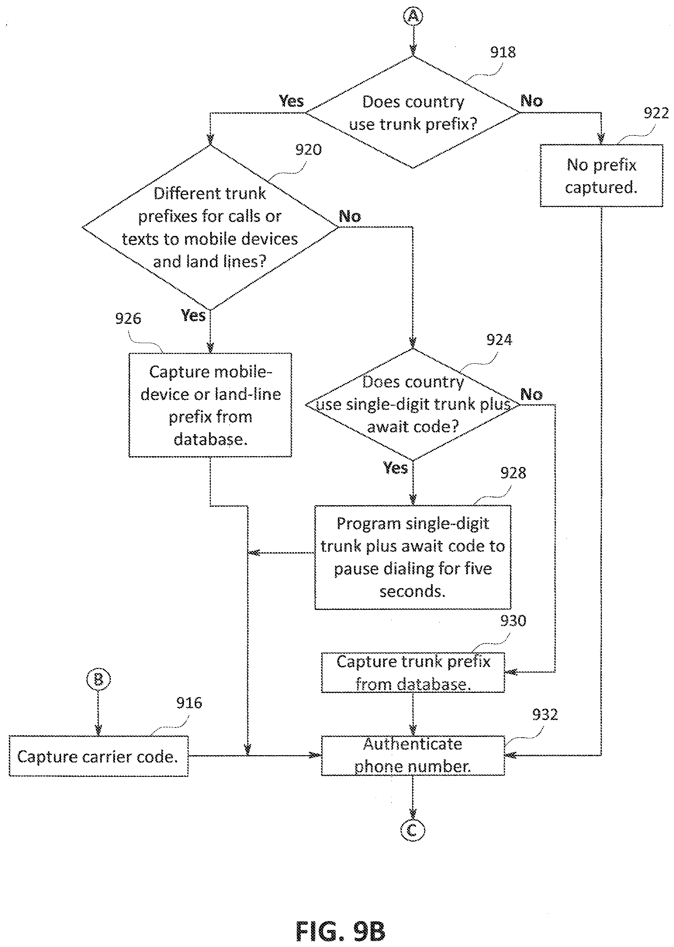

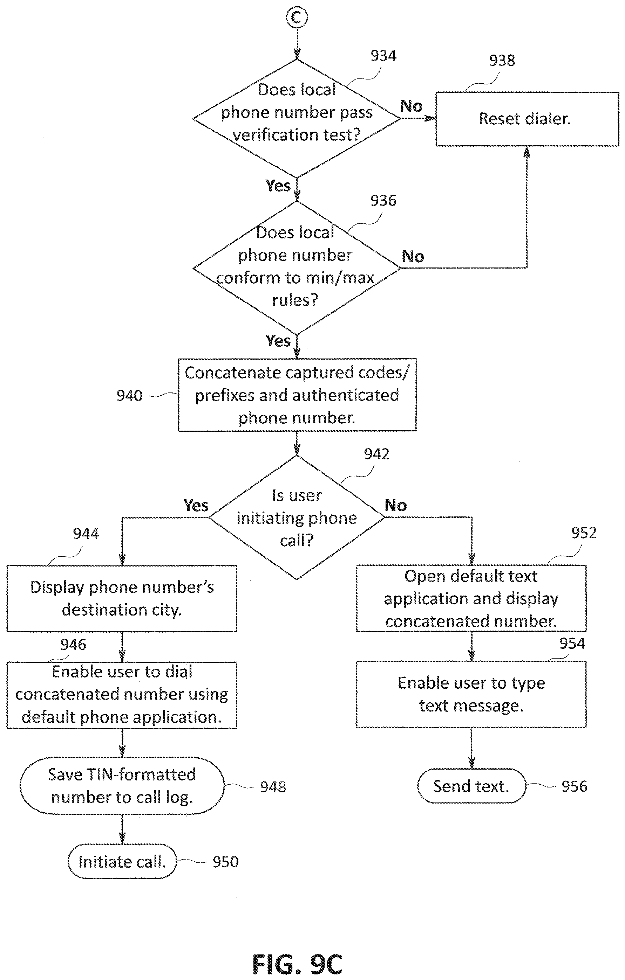

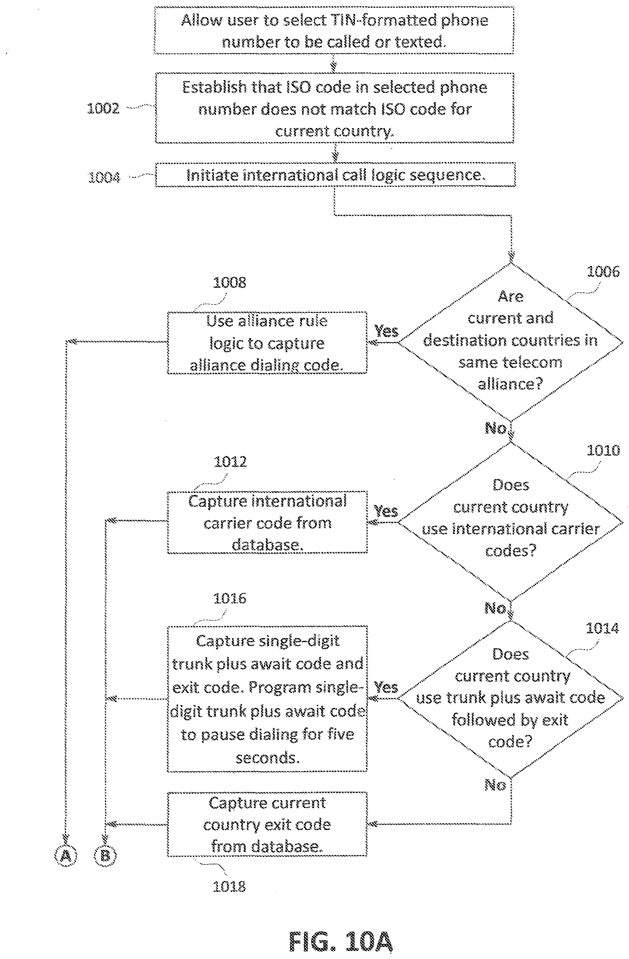

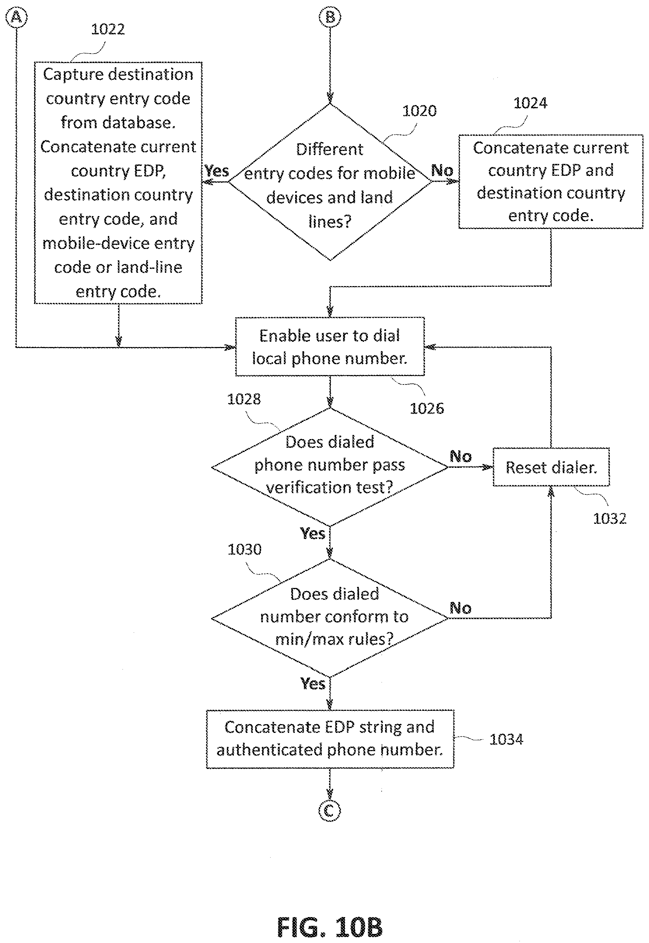

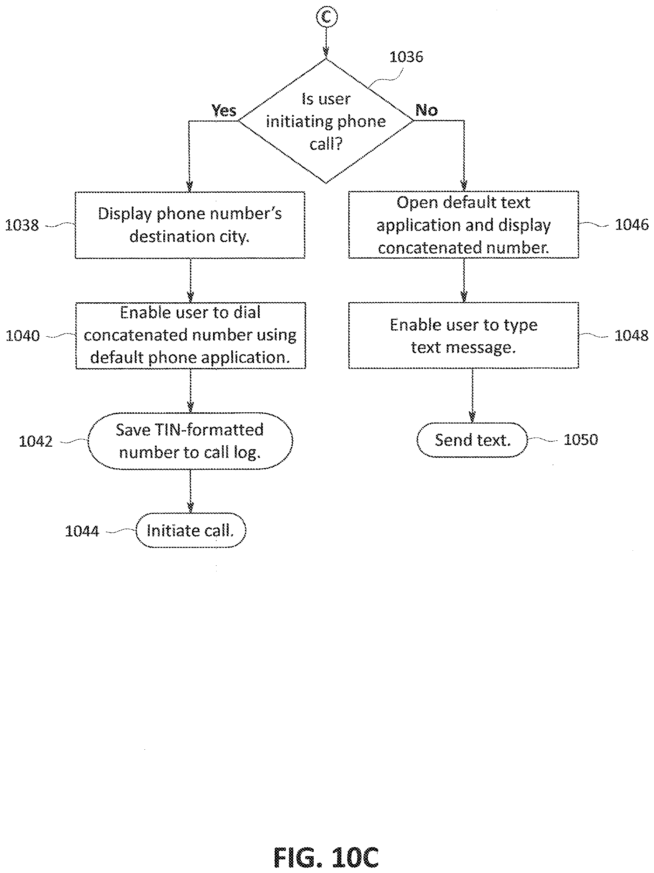

The call or text to the local phone number is made from an originating country to a destination country. The communication device may be in the originating country and may be able to determine its location. The destination country may be the country that corresponds to the ISO country code in the reformatted phone number. The originating country and the destination country may be compared to determine if they are the same. If the two countries are the same, a domestic call logic sequence may be invoked. If the two countries are different, an international call logic sequence may commence. The appropriate call logic sequence may be initiated at block 114. The call logic sequence may determine the dialing codes and prefixes necessary to complete the call or send the text to the local phone number. The domestic call logic sequence and the international call logic sequence are depicted in FIGs. 9A - 9C and 10A - 10C, respectively.

At block 116, the local phone number may be authenticated. The authentication process determines if the local phone number is an actual phone number in the destination country. Two tests are involved. The verification test compares the first few digits of the local phone number to verification sequences in a verification database. Verification sequences are sequences of digits that begin phone numbers in the destination country. The digit count test compares the number of digits in the local phone number to minimum and maximum rules (MMR) retrieved from a database containing dialing codes and prefixes. The MMR specify the minimum and maximum number of digits contained in phone numbers in the destination country. The local phone number is authenticated if it passes both the verification test and the digit count test. An authenticated local phone number begins with a sequence of digits that matches a verification sequence and contains an appropriate number of digits for phone numbers in the destination country.

At block 118, the authenticated local phone number may be concatenated with a dialing protocol. The dialing protocol may contain the dialing codes and prefixes needed to call or text the local phone number. The dialing codes and prefixes may have been identified and captured during the call logic sequence initiated at block 114. For example, the exit code for the originating country and the entry code for the destination country may constitute the dialing protocol that is concatenated with the local phone number. The concatenation of the dialing protocol and the local phone number may result in a concatenated phone number. At block 120, the phone number may be saved to the call log in the global dialing format. The concatenated phone number may be contacted, i.e., called or texted, at block 122.

FIGs. 2A and 2B are logic flow diagrams for determining how a phone number may be entered to initiate a call or a text message. The entering of a phone number may be accomplished in one of four ways. The app may enable the user to select the manner in which a phone number is entered. The selection made by the user may be influenced by several factors. FIGs. 2A and 2B depict these factors and how they combine to help the user choose the way a particular phone number will be entered. The selection of an entry mode may begin at block 202 after the app is launched on the user's communication device.

At block 202, a new contact's phone number may be reformatted. The phone number may be converted to the TIN dialing format. The contact is referred to as "new" because it was reformatted after the app was launched.

At block 204, the user's current country may be identified. The current country may be determined automatically or entered manually. The GPS receiver on the communication device may automatically identify the user's current country. Alternatively, the user may select his or her current country from a list of countries displayed on a screen of the communication device.

At block 206, the user's current country may be compared to the user's home country. The user's home country is the country in which the communication device was configured. If the user's current and home countries are the same, the logic sequence continues at block 214. If the two countries are different, the logic sequence continues at block 208.

At block 208, the user is in a country other than his or her home country and the app may determine if the user previously selected a calling method for the present country. The logic sequence continues at block 212 if a calling method has been selected. Otherwise, the logic sequence continues at block 210.

At block 212, the app may determine if the user is still using the previously selected calling method. If so, the logic sequence continues at block 214. If not, the logic sequence continues at block 210.

At block 210, the logic sequence may enable the user to select a calling method for use in the present country. The options available to the user may include a local SIM card, a global SIM card, a Wi-Fi network, an international calling plan, or the like. The logic sequence continues at block 214 once the user has chosen a calling method.

At block 214, the app may enable the user to choose an entry mode for the TIN-formatted phone number to be called or texted. The user can choose the contacts list at block 216a, manual entry at block 216b, the call log at block 216c, or QR codes at block 216d. The user's choice determines the actions taken prior to the initiation of the call or text.

The logic sequence continues at block 218 if the user chooses the contacts list at block 216a. At block 218, the app may display the contacts list and enable the user to select a contact from the list. The logic sequence continues at block 220, where the app may allow the user to select the TIN-formatted phone number from the chosen contact.

The logic sequence continues at block 222 if the user chooses manual entry at block 216b. At block 222, the app may display the screen for the default dialer application. The logic sequence continues at block 224. At bock 224, the app allows the user to enter the TIN-formatted phone number using the default dialer application.

The logic sequence continues at block 226 if the user chooses the call log at block 216c. At block 226, the app may display the call log entries and enable the user to choose an entry. The logic sequence continues at block 228. At block 228, the app may allow the user to select the TIN-formatted phone number from the chosen call log entry.

The logic sequence continues at block 230 if the user chooses QR codes at block 216d. At block 230, the app may display a list of QR codes and may allow the user to select a QR code from the list. The logic sequence continues at block 232. At block 232, the app may allow the user to select the TIN-formatted phone number from the chosen QR code.

Block 234 is reached no matter which entry option is selected by the user. The logic sequence may advance from block 220, 224, 228, or 232 to block 234, where the app enables the user to select calling or texting of the TIN-formatted phone number. The selected option - calling or texting - is initiated at block 236.

The phone number selected at block 220, 228, or 232 or entered at block 224 was previously converted to the TIN dialing format by the app. The reformatted phone number may be a concatenation of an ISO country code and a local phone number in the destination country represented by the ISO country code.

For purposes of this disclosure, selecting or entering a TIN-formatted phone number is different from calling or texting a TIN-formatted phone number. This is evident in FIG. 2B, where selecting or entering of the phone number takes place at block 220, 224, 228, or 232 and calling or texting of the phone number is initiated at block 236. Selecting or entering occurs when the digits of the local phone number are input to the user's communication device. TIN dialing logic adds the appropriate dialing codes or prefixes and the concatenated phone number is called or texted when the phone number is passed to a telecommunications network by the communication device. The network routes the call or text to the intended recipient..

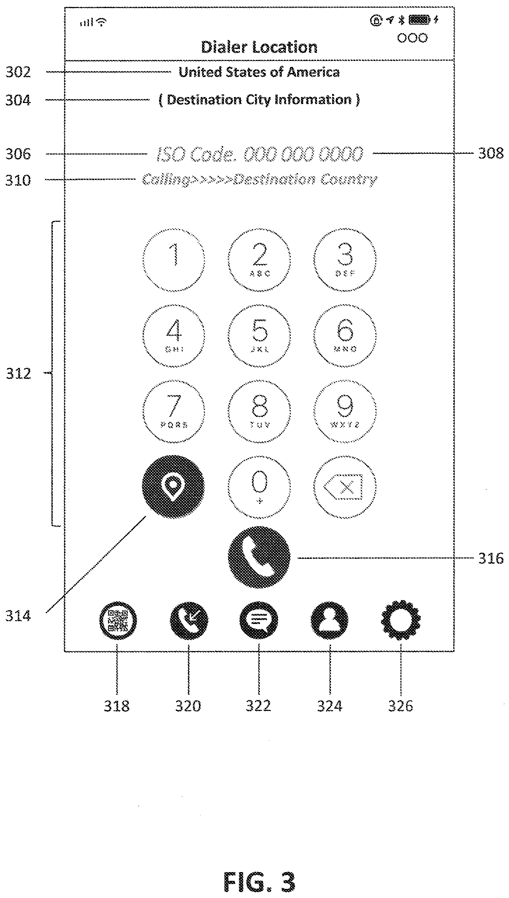

FIG. 3 is an illustration of a home screen that appears on the user's communication device after launch of the software application that performs the functions disclosed herein. A dialer location field 302 displays the country in which the communication device is currently located. In FIG. 3, the dialer location field 302 indicates that the communication device is located in the "United States of America." The dialer location may be automatically determined. However, there may be some instances when the communication device is unable to detect the current country. When this occurs, the user may tap the dialer location field 302, enter the first few letters of the name of the current country, and select the current country from the dropdown list that appears.

Once a phone number has been dialed, a destination city field 304 may display the city that is the destination of the phone call. The destination city field 304 may help the user determine if the phone number has been dialed correctly. For example, if the user inadvertently dials an incorrect phone number, the destination city field 304 may display a city other than the intended destination city. When this occurs, the user may realize that he or she dialed an incorrect phone number and may retry entering the correct phone number.

For some countries, the destination city field 304 may display geographical areas instead of cities. For other countries, the app may determine if the recipient device is a mobile device or a land line. Accordingly, the type of the recipient device may be displayed in the destination city field 304 along with the destination city. If an international phone number is dialed, the destination city field 304 may display the destination city along with the local date and time.

An ISO country code field 306 may be used to select the destination country. The user may tap the ISO country code field 306 and a dropdown list appears. The user selects the appropriate country from the list and the ISO country code for the selected country appears in the ISO country code field 306.

The app may compare the destination country that has the ISO country code displayed in the ISO country code field 306 to the country displayed in the dialer location field 302. The user is making a domestic phone call if the two countries are the same. If the two countries are different, the user is making an international phone call.

A phone number field 308 may show the local phone number dialed by the user. The local phone number is in the destination country having the ISO country code displayed in the ISO country code field 306. The ISO country code and the local phone number are combined to display the phone number in the TIN dialing format "ISO.number," where "ISO" is the ISO country code for the destination country and "number" is the local phone number in the destination country.

A calling field 310 may display the country that is the destination of the phone call. The destination country appearing in the calling field 310 should be the same as the destination country the user intends to call. If the two are different, the user did not select the correct country from the dropdown list that appeared after he or she tapped the ISO country code field 306. The user should continue to tap the ISO country code field 306 and select a country from the dropdown list until the country displayed in the calling field 310 is the same as the country the user plans to call.

A keypad 312 may enable the user to dial a local phone number in the destination country. The dialed local phone number may be shown in the phone number field 308. Accordingly, the user may review the displayed phone number to determine if the phone number was dialed correctly.

An automatic country locator 314 may be a global positioning system (GPS) receiver that determines the country in which the communication device is currently located. The current country is displayed in the dialer location field 302. The automatic country locator 314 does not function when there is a GPS outage. The user may compensate for the failure of the automatic country locator 314 by using the dialer location field 302 to select the current country. As explained above, the user may tap the dialer location field 302, enter the first few letters of the name of the current country, and select the current country from the dropdown list that appears.

The user may tap the caller icon 316 to place a phone call after he or she has confirmed that the appropriate destination country is displayed in the calling field 310 and the correct local phone number appears in the phone number field 308. The TIN dialing logic adds the appropriate codes or prefixes to the dialed number and the concatenated phone number is passed to a telecommunications network by the communication device. The network routes the phone call to its intended recipient.

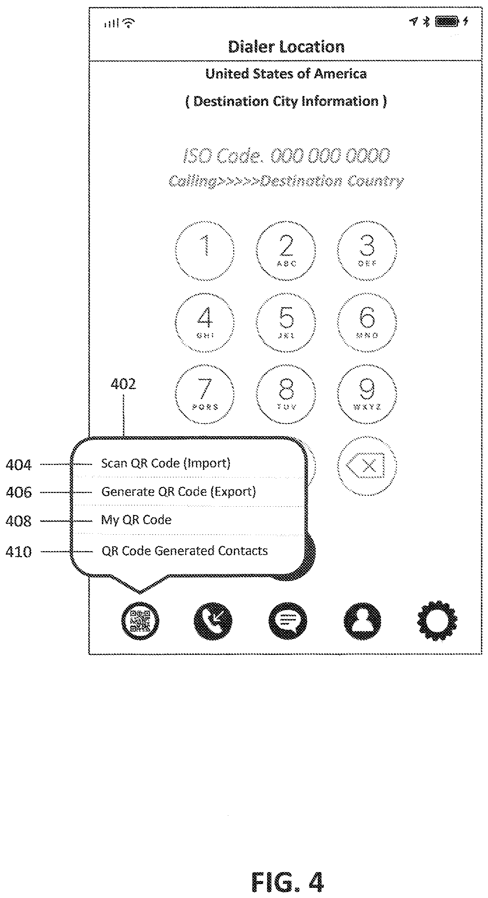

A QR code icon 318 may be located at the bottom of the dialer screen. The QR code menu appears once the QR code icon 318 is tapped. Options on the QR code menu enable the user to import and export contact information using QR codes. The QR code menu and its options are explained in detail with reference to FIG. 4.

A call log icon 320 may be located at the bottom of the dialer screen adjacent to the QR code icon 318. The call log icon 320 is tapped to make the call log appear. The call log is a list of phone numbers called by the user. Both domestic and international phone numbers are included. The phone numbers are saved to the call log in the TIN dialing format.

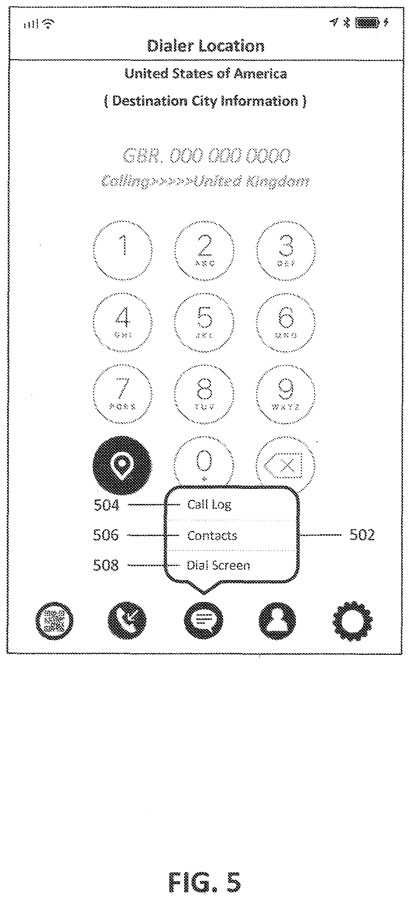

A texting icon 322 may be located next to the call log icon 320 at the bottom of the dialer screen. The texting menu appears once the texting icon 322 has been tapped. A text message may be initiated in several ways. The options available on the texting menu allow the user to select how he or she intends to initiate a text. The texting menu and its options are explained in detail with reference to FIG. 5.

A contacts icon 324 may be adjacent to the texting icon 322 near the bottom of the dialer screen. The contacts icon 324 is tapped and the contacts list appears. The contacts are saved to the list by the user.

A settings icon 326 may be the last of the icons found at the bottom of the dialer screen. A settings menu is displayed when the settings icon 326 is tapped. The menu lists the settings that may be changed. The user selects the setting he or she wants to change. Several options appear. The user chooses the option that matches his or her preference for the selected setting. In this manner, the user customizes the various settings for the communication device.

FIG. 4 is an illustration of a dialer screen on a communication device after the QR code icon has been selected. The QR code menu 402 appears and its options allow the user to import or export contact information contained in QR codes. When "Scan QR Code (Import)" 404 is selected, the user may use the camera on his or her communication device to capture a QR code displayed on another user's communication device. In this manner, the user obtains the contact information represented by the QR code. The import of QR codes is explained in detail with reference to FIG. 7.

The app displays a list of contacts when "Generate QR Code (Export)" 406 is selected. The user chooses the contacts whose information he or she will export. The app may generate a QR code that contains the information about the contacts. Another user may use the camera on his or her communication device to capture the QR code that is generated and then displayed on the user's communication device. In this manner, the user shares the contact information represented by the QR code. The export of QR codes is explained in detail with reference to FIG. 6.

When "My QR Code" 408 is selected, the app displays the QR code that represents the user's contact information. The user chooses this option when he or she wants to use a QR code to export his or her contact information only.

When "QR Code Generated Contacts" 410 is selected, the app may display a database containing contacts whose information was imported via a QR code. A contact may be selected from the list and his or her information may be displayed. The contact information was extracted from an imported QR code.

FIG. 5 is an illustration of the dialer screen on the communication device after the texting icon 322 has been selected. The texting menu 502 appears and the user may select one of the options to initiate a text message. When "Call Log" 504 is chosen, the app may display the call log and the user may select a phone number to receive the text. When "Contacts" 506 is chosen, the app may display the list of contacts saved by the user. A phone number may be selected to receive the text. When "Dial Screen" 508 is chosen, the app may display the dialer screen shown in FIG. 3. The user is allowed to enter the phone number to be texted using the ISO country code field 306 to select the country where the text's recipient is located and the keypad 312 to manually enter the recipient's local phone number.

FIG. 6 is a logic flow diagram for creating a QR code for contact sharing. The QR code may represent contact information for the user or a number of the user's contacts and may be exported to the communication device of another user. The export logic sequence may begin at block 602, where the user is enabled to select the QR code icon 318 located at the bottom of the dialer screen shown in FIG. 3.

At block 604, the user may select "Generate QR Code (Export)" 406 or "My QR Code" 408 when the QR code menu 402 appears. The user chooses "Generate QR Code (Export)" 406 when the user wants to create a QR code for multiple contacts he or she has selected. Alternatively, the user may choose "My QR Code" 408 when he or she wants to export his or her own contact information.

At block 606, the export logic sequence may create an empty list that will eventually store data structures for the selected contacts. Alternatively, the list will store a single data structure for the user. A data structure may consist of data elements that include the first name, last name, company, ISO country code, and phone number of a selected contact or the user.

Block 608 is a query that determines which menu option was selected by the user at block 604. The export logic sequence continues at block 610 if "Generate QR Code (Export)" 406 was chosen. At block 610, a loop may be initiated. The loop may iterate until the last of the selected contacts has been processed. A contact is processed at blocks 612 and 614. At block 612, the data elements for a selected contact may be combined to create a data structure. At block 614, the data structure may be inserted into the empty list created at block 606.

At block 616, the export logic sequence may determine if the last of the selected contacts has been processed. If so, the logic sequence continues at block 618. Otherwise, the logic sequence continues at block 610, the loop iterates again, and another contact is processed.

The export logic sequence may continue at block 620 if it is determined at block 608 that the user did not select "Generate QR Code (Export)" 406 at block 604. Instead, the user selected "My QR Code" 408. The user's data elements are processed at blocks 620 and 622 just like a contact's data elements are processed at blocks 612 and 614. At block 620, the data elements for the user may be combined to create a data structure. At block 622, the data structure may be inserted into the empty list created at block 606.

The export logic sequence continues at block 618. This block is also reached from block 616 when the logic sequence determines that the last of the selected contacts has been processed. At block 618, a QR code may be generated from the list populated by data structures for the selected contacts or a data structure for the user. Export may occur when the camera on another user's communication device scans the QR code. Hence, the user shares the contact information represented by the QR code with another user.

FIG. 7 is a logic flow diagram for importing a QR code. When a user imports a QR code, he or she receives contact information from another user. The other user initiates the export logic sequence on his or her communication device to generate the QR code that is scanned by the user. The QR code may contain contact information for multiple contacts or the other user.

The import logic sequence may begin at block 702, where the user is enabled to select the QR code icon 318 located at the bottom of the dialer screen shown in FIG. 3. At block 704, the user may select "Scan QR Code (Import)" 404 when the QR code menu 402 appears. The import logic sequence continues at block 706, where the user is enabled to scan the QR code generated by the other user. The QR code is scanned using the camera on the user's communication device.

At block 708, the list of data structures may be extracted from the QR code content. At block 710, a loop may be initiated. The loop may iterate until the logic sequence has processed the data structure for each contact. Processing may begin at block 712, where a data structure is extracted from the list and separated into the contact's data elements.

At block 714, the import logic sequence may attempt to authenticate the contact's phone number included in the data elements. Authentication confirms that the phone number is an actual phone number in the destination country. The phone number is compared to the destination country's minimum, maximum, and verification rules. A phone number is authenticated if the number of digits conforms to the minimum and maximum rules and the first few digits match a verification sequence for the destination country.

Block 716 is a query that determines if the contact's phone number was authenticated at block 714. The import logic sequence may continue at block 718 if authentication confirmed that the contact's phone number is a valid phone number in the destination country. If the contact's phone number was not authenticated, the logic sequence may continue at block 720, where a manual correction screen is displayed. It allows the user to edit the contact's phone number. Block 722 is a query that determines if the user edited the phone number. If editing occurred, the logic sequence may continue at block 718. Otherwise, the unedited unauthenticated phone number is discarded at block 724 and the import logic sequence advances to block 726.

Only a successfully authenticated phone number reaches block 718. The phone number may be an unaltered phone number authenticated at block 714. Alternatively, the phone number may be a manually-edited phone number. The phone number is edited when the user interacts with the manual correction screen to convert an unauthenticated phone number to a valid phone number in the destination country. At block 718, the unaltered phone number or the manually-edited phone number and the remaining data elements may be added to the database containing QR code generated contacts.

At block 726, the app may determine if the data structure for the last contact has been processed. The import logic sequence ends if the criterion at block 726 is satisfied. Otherwise, the logic sequence continues at block 710, the loop iterates again, and another data structure is processed.

Alternatively, block 726 may be reached from block 724. In this instance, block 726 may determine if the data structure that contained the discarded phone number is the data structure for the last contact. The import logic sequence progresses as discussed above once it advances from block 724 to block 726.

In an implementation, JavaScript Object Notation (JSON) is used to exchange contact information via QR codes. JSON is an open standard file format and data interchange format that uses human-readable text to store and transmit data objects and arrays. It is cross-platform compatible allowing the present application to freely exchange contact information between Apple and Android cellular devices.

A JSON array is used to share contact information via a QR code because the array allows the present app to use a standardized procedure for importing contact information whether the QR code represents the contact information for a single contact (i.e., the user) or multiple contacts. A JSON array contains JSON objects. Each JSON object consists of attribute/value pairs that convey a contact's information. In the present embodiment, a JSON object is a combination of the following attribute/value pairs: first name/contact's first name; last name/contact's last name; company/contact's employer (optional); ISO/ISO country code for the country where the contact's phone number is registered; and phone number/contact's local phone number.

In FIGs. 6 and 7, a list may be a JSON array; a data structure may be a JSON object; and an element may be a JSON attribute/value pair. At block 606, an empty JSON array may be created. For each of the selected contacts, a JSON object may be formed by combining the attribute/value pairs for the contact at block 612 and the JSON object may be inserted into the JSON array at block 614. Alternatively, a single JSON object may be created by combining the attribute/value pairs for the user at block 620. The single JSON object may be inserted into the JSON array at block 622. At block 618, a QR code that represents the JSON array may be generated whether the JSON array contains a single JSON object or multiple JSON objects. The QR code is a graphical representation of the text in the JSON array.

A JSON array is assembled to export contact information as shown in FIG. 6. In contrast, a JSON array is disassembled to import contact information as shown in FIG. 7. Before disassembly can occur, the QR code is scanned by the camera on the user's communication device at block 706. At block 708, a JSON array may be extracted from the QR code content. The present app may loop through the JSON array. Each iteration of the loop may extract a contact's JSON object at block 712. The contact's JSON object may be separated into its component attribute/value pairs. The contact's local phone number may be taken from the appropriate attribute/value pair and subjected to the authentication process at block 714. If the phone number is authenticated, the phone number and the information in the remaining attribute/value pairs may be added to the database of QR code generated contacts at block 718.

The present embodiment uses JSON and QR codes to share contact information. However, other embodiments may share contact information using other data interchange formats and methods for representing information. Further, additional embodiments may use hybrids of JSON and QR codes and the other formats and methods to achieve the sharing of contact information.

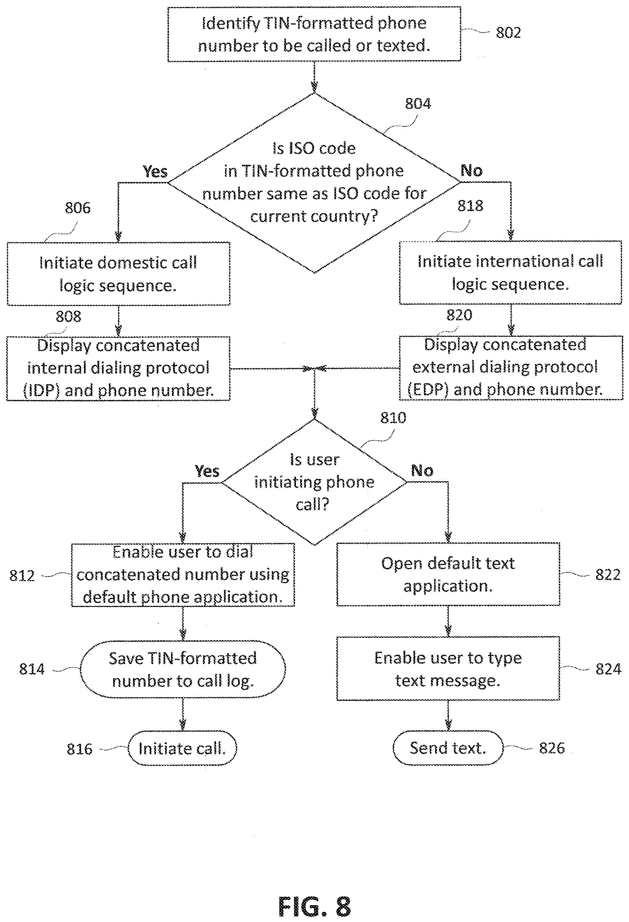

FIG. 8 is a logic flow diagram for a call logic sequence used to call or text a phone number. Block 802 may identify the TIN-formatted phone number to be called or texted. For example, the TIN-formatted phone number may be "USA.5011234567." "USA" is the ISO country code for the United States and "5011234567" is a ten-digit U.S. phone number.

At block 804, the app may determine if the ISO country code in the TIN-formatted phone number is the same as the ISO country code for the user's current country. The call logic sequence may continue at block 806 if the ISO country codes are the same. At block 806, the app may initiate a domestic call logic sequence. At block 808, the app may display a domestic concatenation which is a combination of an internal dialing protocol (if any) and the local phone number. Blocks 806 and 808 are explained in detail with reference to FIGs. 9A - 9B. The call logic sequence may continue at block 810.

In an embodiment, a user located in the United States may want to use his or her mobile device to call or text the TIN-formatted phone number "USA.5011234567." The ISO country code in the TIN-formatted phone number is the same as the ISO country code for the user's current country. Accordingly, the domestic call logic sequence is initiated. However, concatenation is not needed because there is no internal dialing protocol for mobile phone calls or texts in the United States.

The call logic sequence may continue at block 818 if the app determines that the ISO country codes differ at block 804. At block 818, the app may initiate an international call logic sequence. At block 820, the app may display an international concatenation which is a combination of an external dialing protocol (EDP) and the local phone number. Blocks 818 and 820 are explained in detail with reference to FIGs. 10A - 10C. The call logic sequence may continue at block 810.

Block 810 may be reached whether the domestic call logic sequence is invoked at block 806 or the international call logic sequence is invoked at block 818. At block 810, the app may determine if the user is initiating a phone call. If so, the app may advance to block 812. Otherwise, the user is initiating a text message and the app may progress to block 822.

At block 812, the app may enable the user to dial the domestic concatenation displayed at block 808 or the international concatenation displayed at block 820. Block 812 is followed by block 814, where the TIN-formatted phone number is saved to the call log on the user's communication device. The app may advance from block 814 to block 816. At this block, the phone call is initiated.

Block 822 may be reached if the user is not initiating a phone call at block 810. Instead, the user is preparing to send a text message. Accordingly, at block 822, the app may open the default text application on the user's communication device. Block 822 is followed by block 824, where the app enables the user to type the text message. At block 826, the text message is sent once the user is finished typing at block 824.

FIGs. 9A - 9C are logic flow diagrams for a domestic call logic sequence. The user may select a TIN-formatted phone number to be called or texted. The ISO country code in the selected phone number may match the ISO country code for the user's current country. The matching ISO country codes may indicate that the user will be calling or texting a domestic phone number. Accordingly, the domestic call logic sequence may be initiated.

At block 902, the app may determine if the country uses domestic carrier codes. The domestic call logic sequence may continue at block 904 if domestic carrier codes are used. Otherwise, the logic sequence may continue at block 918.

At block 904, the app may determine if the user previously designated a default carrier. If so, the domestic call logic sequence may continue at block 908. If not, the logic sequence may continue at block 906, where the app prompts the user to select a carrier and saves the selected carrier as the default carrier. The logic sequence may advance to block 908.

At block 908, the app may determine if the default carrier utilizes different logic for intra-city and inter-city phone calls or texts. For example, a user is located in Buenos Aires, Argentina. Phone calls made to Buenos Aires are intra-city phone calls. Phone calls made to other cities in Argentina are inter-city phone calls. Inter-city calls are also referred to as "domestic long-distance phone calls."

The domestic call logic sequence may continue at block 910 if the app determines at block 908 that different dialing logic is used. The call logic sequence may continue at block 916 if the same dialing logic is used for intra-city and inter-city phone calls or texts.

At block 910, the app may determine if the phone call or text has an intra-city terminus. If so, the domestic call logic sequence may continue at block 912. At this block, the app may extract the default carrier's intra-city code from the database containing dialing codes and prefixes. The domestic call logic sequence may advance to block 916.

If the phone call or text does not have an intra-city terminus at block 910, the call or text has an inter-city terminus and the domestic call logic sequence may continue at block 914. At this block, the default carrier's inter-city code may be extracted from the database. The domestic call logic sequence may progress from block 914 to block 916.

Block 916 may be reached from three different blocks. The domestic call logic sequence may advance from block 908 to block 916 if different dialing logic is not used for intra-city and inter-city phone calls or texts. If this is the case, the default carrier's code may be captured at block 916. The call logic sequence may progress to block 916 once the default carrier's intra-city code has been extracted from the database at block 912. The default carrier's intra-city code may be captured at block 916. The call logic sequence may proceed to block 916 once the default carrier's inter-city code has been extracted from the database at block 914. The default carrier's inter-city code may be captured at block 916. Once one of the three carrier codes has been captured at block 916, the domestic call logic sequence may progress to block 932.

At block 902, the app may determine that the country does not use domestic carrier codes. The domestic call logic sequence may continue at block 918 when domestic carrier codes are not used. At block 918, the app may determine if the country uses a trunk prefix.

Trunk prefixes are used by more than 100 countries. The most common trunk prefixes are "1" for countries subscribing to the North American Numbering Plan (NANP), "8" for countries of the former Soviet Union, and "0" for the majority of European, African, Asian, Pacific, and Middle Eastern countries.

The domestic call logic sequence may continue at block 920 if a trunk prefix is used. At block 920, the app may determine if the country's trunk prefix differs depending upon the type of device called or texted. In other words, the app may determine if the country uses different trunk prefixes for calls or texts to mobile devices and land lines.

In an embodiment, a user may travel to Argentina and decide to make a domestic phone call. In Argentina, one trunk prefix is used for inter-city phone calls regardless of the type of device called. However, different trunk prefixes are used for intra-city phone calls. One trunk prefix is used if an intra-city phone call is made to a mobile device and another trunk prefix is used if an intra-city phone call is made to a land line. Thus, when the user places an intra-city phone call in Argentina, an alert appears on the screen of his or her communication device. The alert informs the user that Argentina uses different trunk prefixes for intra-city phone calls and prompts the user to select either the mobile device option or the land line option.

The domestic call logic sequence may progress from block 920 to block 926 if the app recognizes that the country uses different trunk prefixes. At block 926, the app may access the database containing dialing codes and prefixes and capture the trunk prefix for mobile devices or the trunk prefix for land lines. The domestic call logic sequence may continue at block 932.

At block 920, the app may determine that the country does not use different trunk prefixes for mobile devices and land lines. If this determination is made, the domestic call logic sequence may continue at block 924. At block 924, the app may determine if the country uses a single-digit trunk plus await code. If this combination code is used, the domestic call logic sequence may continue at block 928.

At block 928, the app may capture the single-digit trunk plus await code from the database containing dialing codes and prefixes. The app may program the captured digit and await code to pause dialing or texting of a phone number for five seconds. For example, Belarus uses the digit "8" as the single-digit trunk code for domestic phone calls and texts. In an embodiment, a user located in Belarus may decide to call the domestic phone number "25 639 8752." The digit "8" is followed by a special character and the app programs the digit and character to pause dialing and concatenates them with the domestic phone number. The pause character for Apple and Android devices is a comma. The app concatenates "8," the pause character, and the domestic phone number. When the concatenation "8, 25 639 8752" is dialed, there is a five-second pause between the digit "8" and the digit "2" at the beginning of the domestic phone number. After the single-digit trunk plus await code have been programmed, the domestic call logic sequence may continue at block 932.

At block 924, the app may determine that the country does not use a single-digit trunk plus await code. When this combination code is not used, the domestic call logic sequence may continue at block 930. At this block, the country's trunk prefix may be captured from the database containing dialing codes and prefixes. The domestic call logic sequence may continue at block 932.

At block 918, the app may recognize that the country does not use a trunk prefix. Accordingly, there is no trunk prefix to capture at block 922 and the domestic call logic sequence may continue at block 932.

Block 932 may be reached from five different blocks in the domestic call logic sequence. The blocks are 916, 922, 926, 928, and 930. The answers to the various queries in the logic sequence determine which of these blocks immediately precedes block 932.

At block 932, the app may attempt to authenticate the local phone number. The authentication process has two steps. The first step is the verification test. The app compares the first few digits of the local phone number to the country's verification sequences found in the verification database. The local phone number passes the verification test if the first few digits match a verification sequence.

The second step of the authentication process compares the number of digits in the local phone number to the country's minimum and maximum rules (MMR) found in the database containing dialing codes and prefixes. The local phone number conforms to the MMR if it has an acceptable number of digits. Authentication occurs if the local phone number passes the verification test and conforms to the MMR.

Blocks 934 and 936 determine the outcome of the authentication process. At block 934, the app may determine if the local phone number passes the verification test. If the criterion at block 934 is satisfied, the domestic call logic sequence may continue at block 936. If a matching verification sequence is not found, the call logic sequence may continue at block 938, where the dialer resets.

At block 936, the app may determine if the local phone number conforms to the current country's MMR. If the local phone number has an appropriate number of digits, the domestic call logic sequence may continue at block 940. If the local phone number has too few or too many digits, the call logic sequence may continue at block 938, where the dialer resets.

At block 940, the app may concatenate any captured code or prefix and the local phone number. The result is a domestic concatenation. The captured code may be a domestic carrier code, carrier intra-city code, carrier inter-city code, or single-digit trunk plus await code. The captured prefix may be a trunk prefix, mobile-device trunk prefix, or land-line trunk prefix. Alternatively, the app may not capture a code or prefix. This occurs when the country does not use a domestic carrier code at block 902 and does not use a trunk prefix at block 918. Accordingly, the local phone number may remain unchanged and is called or texted at subsequent blocks in the domestic call logic sequence (provided the local phone number passes the country's verification test at block 934 and conforms to the country's minimum and maximum rules at block 936).

The domestic call logic sequence may progress to block 942. At this block, the app determines if the user intends to initiate a phone call. If so, the call logic sequence may continue at block 944. If not, the user intends to send a text message and the call logic sequence may continue at block 952.

At block 944, the destination city for the local phone number may be displayed in the destination city field 304 near the top of the dialer screen shown in FIG. 3. At block 946, the app may enable the user to dial the domestic concatenation utilizing the default phone application on the communication device. The TIN-formatted phone number may be saved to the call log at block 948 and the phone call may be initiated at block 950.

If the user is sending a text message, the app may open the default text application on the communication device and display the domestic concatenation at block 952. The user may be enabled to type the text message at block 954 and the text message may be sent at block 956.

FIGs. 10A - 10C are logic flow diagrams for an international call logic sequence. The user selects the TIN-formatted phone number to be called or texted. At block 1002, the app establishes that the ISO country code in the selected phone number does not match the ISO country code for the user's current country. The different ISO country codes indicate that the user intends to make an international phone call. Accordingly, the international call logic sequence may be initiated at block 1004. The logic sequence may begin at block 1006.

At block 1006, the app may determine if the user's current country and the destination country are members of the same telecommunications alliance. To make this determination, the app may access the database of dialing codes and prefixes. The records for the current country and the destination country may be compared to ascertain if both records refer to the same telecommunications alliance. For example, the North American Numbering Plan (NANP) is an alliance that includes countries in North America and the Caribbean and territories of the United States. The East African Numbering Plan (EANP) is another example of a telecommunications alliance. The members of this alliance are Tanzania, Uganda, and Kenya.

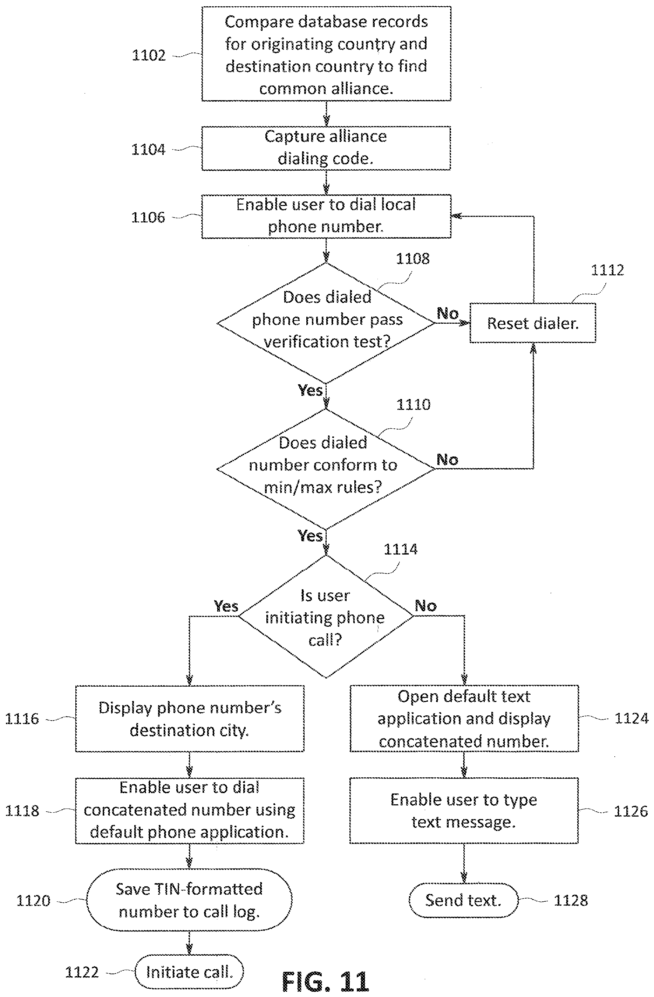

The international call logic sequence may continue at block 1008 if the current country and the destination country are members of the same alliance. At block 1008, alliance rule logic may be used to capture an alliance dialing code from the database containing dialing codes and prefixes. The captured alliance dialing code may be a first external dialing protocol (EDP) string. Alliance rule logic is explained in detail with reference to FIG. 11. The international call logic sequence may continue at block 1026.

If the current country and the destination country are not members of the same telecommunications alliance, the international call logic sequence may advance to block 1010. At this block, the app may determine if the current country uses international carrier codes. If so, the international call logic sequence continues at block 1012. At this block, the appropriate international carrier code may be captured from the database containing dialing codes and prefixes. Once the international carrier code is captured, the international call logic sequence continues at block 1020.

If the current country does not use international carrier codes, the international call logic sequence may advance to block 1014. At this block, the app may determine if the current country uses a single-digit trunk plus await code followed by an exit code. If so, the international call logic sequence continues at block 1016.

At block 1016, the database containing dialing codes and prefixes may be accessed and the current country's single-digit trunk plus await code and exit code may be captured. The single-digit trunk plus await code may be programmed to pause dialing for five seconds. In an embodiment, the single-digit trunk plus await code may be dialed. After a five-second pause, dialing may resume and the exit code is dialed. For example, the single-digit trunk plus await code and the exit code for Belarus are "8," and "10" respectively. If a user makes an international phone call from Belarus, "8," is dialed and dialing pauses for five seconds. After the pause, dialing resumes and the digits "10" are dialed. The international call logic sequence may continue at block 1020 after the single-digit trunk plus await code and the exit code are captured.

At block 1014, the app may determine that the current country does not use a single-digit trunk plus await code followed by the country's exit code. When the combination of codes is not used, the international call logic sequence may progress to block 1018. At this block, the current country's exit code may be captured from the database containing dialing codes and prefixes. The international call logic sequence may continue at block 1020 after capture of the exit code.

At this point in the international call logic sequence, the app may have captured the current country's international carrier code at block 1012, the single-digit trunk plus await code and the current country's exit code at block 1016, or the current country's exit code at block 1018. The individual captured codes constitute an exit-code portion of the EDP for the international phone call. At subsequent blocks in the international call logic sequence, the app will append the entry code(s) for the destination country to complete the EDP.

At block 1020, the app may determine if the destination country uses different entry codes for mobile devices and land lines. The international call logic sequence continues at block 1022 if different entry codes are used. At block 1022, the app may capture the destination country's entry code from the database containing dialing codes and prefixes. The app may concatenate the current country's EDP, the destination country's entry code, and the mobile-device entry code or the land-line entry code. The resulting series of digits is a second EDP string. After the second EDP string is formed, the international call logic sequence may continue at block 1026.

At block 1020, the app may determine that the destination country does not use different entry codes for mobile devices and land lines. The international call logic sequence continues at block 1024 if different entry codes are not used. At block 1024, the app may concatenate the current country's EDP and the destination country's entry code. The resulting series of digits is a third EDP string. After the third EDP string is formed, the international call logic sequence may continue at block 1026.

At block 1026, the user may dial the local phone number in the destination country. The international call logic sequence may continue at block 1028 once the local phone number has been dialed.

At block 1028, the app may determine if the dialed phone number passes the verification test. This test involves the comparison of the first few digits of the dialed phone number to the destination country's verification sequences found in the verification database.

If the first few digits of the dialed phone number match a verification sequence, the phone number passes the verification test and the international call logic sequence continues at block 1030. If a matching verification sequence is not found, the phone number does not pass the verification test for one of two reasons. The user may have inadvertently dialed the phone number incorrectly or the phone number is not a valid phone number in the destination country. The international call logic sequence may continue at block 1032, where the dialer resets. The call logic sequence may return to block 1026 and the user may once again attempt to dial the local phone number. Blocks 1026, 1028, and 1032 are repeated until the user dials the correct phone number and it passes the verification test or until the user is satisfied that the phone number is not a valid phone number in the destination country.

If the local phone number passes the verification test, the international call logic sequence may continue at block 1030. At this block, the app may determine if the dialed phone number conforms to the destination country's minimum and maximum rules (MMR) found in the database containing dialing codes and prefixes. The MMR specify the minimum and maximum number of digits contained in a country's phone numbers. The app may compare the number of digits in the dialed phone number to the MMR for the destination country. If the dialed phone number has an appropriate number of digits, the international call logic sequence may continue at block 1034.

If the dialed phone number has too few or too many digits, it does not conform to the MMR for the destination country for one of two reasons. The user may have inadvertently dialed the phone number incorrectly or the phone number is not a valid phone number in the destination country. The international call logic sequence may continue at block 1032, where the dialer resets. The call logic sequence may return to block 1026 and the user may once again attempt to dial the local phone number. Blocks 1026, 1028, 1030, and 1032 are repeated until the user dials the correct phone number and it conforms to the destination country's MMR or until the user is satisfied that the phone number is not a valid phone number in the destination country. In the latter instance, the dialed phone number passed the verification test, but had too few or too many digits. A valid phone number has to pass the verification test and conform to the MMR for the destination country. Hence, the dialed phone number is not an actual phone number in the destination country even though it passed the verification test.

If the dialed phone number conforms to the MMR, the international call logic sequence may continue at block 1034. At this block, the dialer may concatenate an EDP string and the dialed local phone number. The EDP string may be the first EDP string obtained at block 1008, the second EDP string obtained at block 1022, or the third EDP string obtained at block 1024. The EDP string consists of a series of digits determined by the answers to the sequence of questions at blocks 1006, 1010, 1014, and 1020. The first EDP string is the captured alliance dialing code. The second EDP string is composed of the current country's EDP, the destination country's entry code, and the mobile-device entry code or the land-line entry code. The third EDP string consists of the current country's EDP plus the destination country's entry code. The appropriate EDP string may be concatenated with the dialed local phone number to form an international concatenation.

Once concatenation has occurred, the international call logic sequence may progress to block 1036. At this block, the app determines if the user intends to initiate a phone call. If so, the call logic sequence may continue at block 1038. If not, the user intends to send a text message and the call logic sequence may continue at block 1046.

At block 1038, the destination city for the local phone number may be displayed in the destination city field 304 near the top of the dialer screen shown in FIG. 3. At block 1040, the app may enable the user to dial the international concatenation utilizing the default phone application on the communication device. The TIN-formatted phone number may be saved to the call log at block 1042 and the phone call may be initiated at block 1044.

If the user is sending a text message, the app opens the default text application on the communication device and displays the international concatenation at block 1046. The user is enabled to type the text message at block 1048 and the text message is sent at block 1050.

FIG. 11 is a logic flow diagram for an alliance rule logic sequence. The logic sequence is used at block 1008 in FIG. 10A to capture the alliance dialing code. The logic sequence may begin at block 1102.

At block 1102, a common alliance may be found by accessing the database containing dialing codes and prefixes and comparing the records for the international phone call's originating country and destination country. The app may determine that the originating and destination countries are members of the same telecommunications alliance if the records for both countries contain a reference to the alliance. For example, if a user in the Bahamas is calling Barbados, the app accesses the database containing dialing codes and prefixes, compares the records for the Bahamas and Barbados, and determines that both countries are members of the North American Numbering Plan (NANP) alliance.

The alliance rule logic sequence may continue at block 1104 once the common alliance is identified. At block 1104, an alliance dialing code may be captured from the destination country's record. The logic sequence may advance from block 1104 to block 1106.

At block 1106, the user may dial the local phone number in the destination country. The alliance rule logic sequence may continue at block 1108 once the local phone number has been dialed.

At block 1108, the app may determine if the dialed phone number passes the verification test. This test involves the comparison of the first few digits of the dialed phone number to the destination country's verification sequences found in the verification database.

If the first few digits of the dialed phone number match a verification sequence, the phone number passes the verification test and the alliance rule logic sequence continues at block 1110. If a matching verification sequence is not found, the dialed phone number does not pass the verification test for one of two reasons. The user may have inadvertently dialed the phone number incorrectly or the phone number is not a valid phone number in the destination country. The alliance rule logic sequence may continue at block 1112, where the dialer resets. The logic sequence may return to block 1106 and the user may once again attempt to dial the local phone number. Blocks 1106, 1108, and 1112 are repeated until the user dials the correct phone number and it passes the verification test or until the user is satisfied that the phone number is not a valid phone number in the destination country.

If the dialed phone number passes the verification test, the alliance rule logic sequence may continue at block 1110. At this block, the app may determine if the dialed phone number conforms to the destination country's minimum and maximum rules (MMR) found in the database containing dialing codes and prefixes. The MMR specify the minimum and maximum number of digits contained in a country's phone numbers. The app may compare the number of digits in the dialed phone number to the MMR for the destination country. If the dialed phone number has an appropriate number of digits, the alliance rule logic sequence may continue at block 1114.

If the dialed phone number has too few or too many digits, it does not conform to the MMR for the destination country for one of two reasons. The user may have inadvertently dialed the phone number incorrectly or the phone number is not a valid phone number in the destination country. The alliance rule logic sequence may continue at block 1112, where the dialer resets. The logic sequence may return to block 1106 and the user may once again attempt to dial the local phone number. Blocks 1106, 1108, 1110, and 1112 are repeated until the user dials the correct phone number and it conforms to the destination country's MMR or until the user is satisfied that the phone number is not a valid phone number in the destination country. In the latter instance, the dialed phone number passed the verification test, but had too few or too many digits. A valid phone number has to pass the verification test and conform to the MMR for the destination country. Hence, the dialed phone number is not an actual phone number in the destination country even though it passed the verification test.

If the dialed phone number conforms to the MMR, the alliance rule logic sequence may continue at block 1114. At this block, the app determines if the user intends to initiate a phone call. If so, the logic sequence may continue at block 1116. If not, the user intends to send a text message and the logic sequence may continue at block 1124.

At block 1116, the destination city for the local phone number may be displayed in the destination city field 304 near the top of the dialer screen shown in FIG. 3. At block 1118, the app enables the user to dial the alliance concatenation which is the combination of the alliance dialing code captured at block 1008 in FIG. 10A and the local phone number. The user may dial the alliance concatenation using the default phone application on the communication device. The TIN-formatted phone number containing the local phone number may be saved to the call log at block 1120 and the phone call may be initiated at block 1122.

If the user is sending a text message, the app may open the default text application on the communication device and display the alliance concatenation at block 1124. The user is enabled to type the text message at block 1126 and the text message is sent at block 1128.

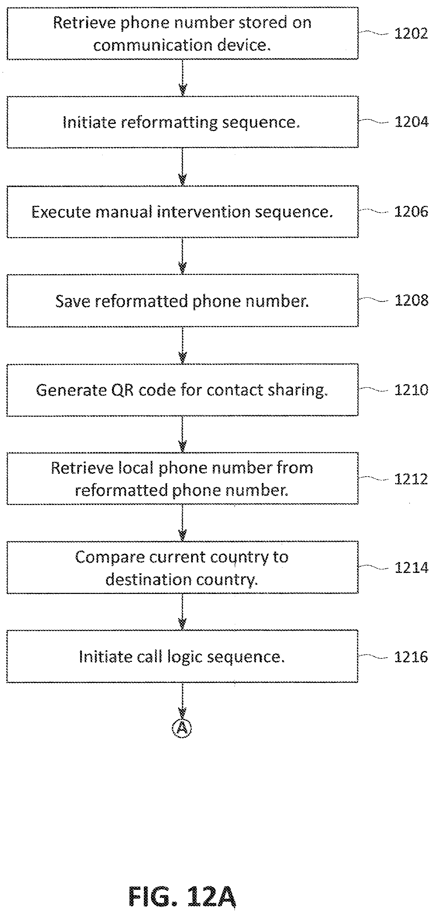

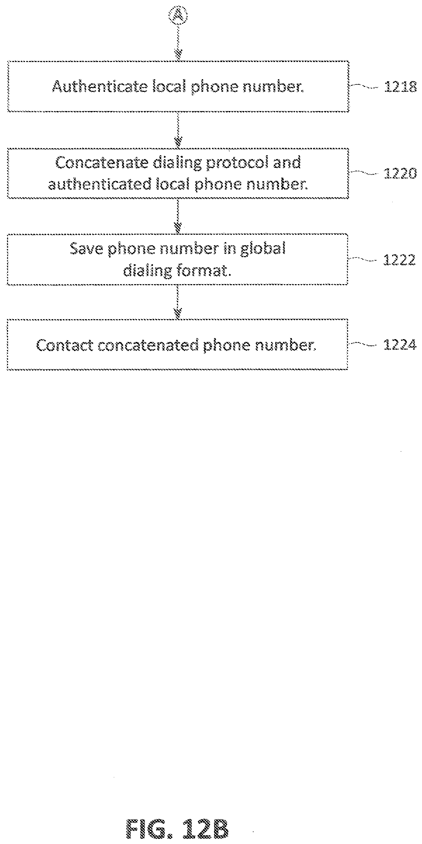

FIGs. 12A and 12B are process flow diagrams of a method for using the global dialing format. The method may be performed when the logic sequence shown in FIG. 1 is implemented as instructions that are read and executed by at least one processor.

At block 1202, a phone number stored on a communication device may be retrieved. At block 1204, a reformatting sequence may be initiated. The reformatting sequence may convert the retrieved phone number to the global dialing format "ISO.number," where "ISO" is the three-letter ISO country code for the destination country and "number" is the local phone number in the destination country.

The reformatting sequence may be composed of four logic sequences. The retrieved phone number may be reformatted by any of the four logic sequences. However, the four logic sequences may be unable to reformat some of the retrieved phone numbers. When this occurs, a user may intervene. At block 1206, a manual intervention sequence may be executed. The manual intervention sequence may allow the user to intercede and reformat the retrieved phone number. At block 1208, the reformatted phone number may be saved to a contacts list on the communication device. The phone number is saved whether it was converted to the global dialing format by the reformatting sequence or the manual intervention sequence.

At block 1210, a QR code may be generated for contact sharing. The QR code may represent contact information for the user or a number of the user's contacts. The generation of a QR code is explained in detail with reference to FIG. 6. Contact sharing may occur when the QR code is exported to the communication device of another user.

At block 1212, the local phone number may be retrieved from the reformatted phone number saved on the user's communication device. Block 1212 may begin the conversion of the saved phone number to a dialable format. This conversion may be initiated when the user decides to dial the saved number and chooses it from a list of phone numbers stored on his or her communication device.

At block 1214, the user's current country may be compared to the destination country. The user's current country is the country in which the communication device is located. The destination country is the country corresponding to the ISO country code in the saved phone number. A domestic call logic sequence may be initiated at block 1216 if the user's current country and the destination country are the same. An international call logic sequence may be initiated at block 1216 if the two countries are different. Whether the phone call is domestic or international, the call logic sequence may determine the dialing codes and prefixes necessary to complete the call to the local phone number. The domestic call logic sequence is explained in detail with reference to FIGs. 9A - 9C and the international call logic sequence is explained in detail with reference to FIGs. 10A - 10C.

At block 1218, the local phone number may be authenticated. The authentication process determines if the local phone number is an actual phone number in the destination country. Two steps are involved. The verification test compares the first few digits of the local phone number to verification sequences that begin phone numbers in the destination country. The local phone number passes the verification test if the first few digits match a verification sequence. The second step of the authentication process compares the number of digits in the local phone number to the minimum and maximum rules (MMR) for the destination country. The MMR specify the minimum and maximum number of digits contained in the destination country's phone numbers. The local phone number conforms to the MMR if it has an appropriate number of digits. Authentication occurs if the local phone number passes the verification test and conforms to the MMR.

At block 1220, the authenticated local phone number may be concatenated with a dialing protocol. The dialing protocol contains the dialing codes and prefixes required to call the local phone number in the destination country. The dialing codes and prefixes were identified and captured during the call logic sequence initiated at block 1216. The concatenation of the dialing protocol and the authenticated local phone number results in a concatenated phone number. At block 1222, the retrieved phone number may be saved to the call log in the global dialing format. The concatenated phone number may be contacted, i.e., called or texted, at block 1224.

The embodiments disclosed herein may be implemented as instructions stored on a tangible, non-transitory, machine-readable medium. These instructions may be read and executed by a computing platform to perform the functions described above. A tangible, non-transitory, machine-readable medium may include any tangible, non-transitory medium for storing information in a form readable by a machine, e.g., a computer. Examples of a tangible, non-transitory, machine-readable medium may include read only memory (ROM), random access memory (RAM), magnetic disk storage media, optical storage media, flash memory devices, or the like.

An embodiment is an implementation or example. Reference to "an embodiment," "present embodiment," "some embodiments," or "other embodiments" signifies that a particular instruction, function, or feature is included in at least some embodiments, but not necessarily in all embodiments, of the present techniques. The various occurrences of "an embodiment," "present embodiment," "some embodiments," or "other embodiments" are not necessarily referring to the same embodiments

All of the instructions, functions, and features described and illustrated herein do not need to be included in a particular embodiment or embodiments. For example, if the specification states that an instruction, function, or feature "may" be included, that particular instruction, function, or feature is not required to be present. If the specification or a claim refers to "a" or "an" element, there is not necessarily only one of the element. If the specification or a claim refers to "an additional element," there may be more than one of the additional element.

Some embodiments have been described by referring to particular implementations. However, other implementations are possible. The implementations of the present techniques are not limited to those disclosed herein. Additionally, the sequence of the instructions or functions and the arrangement of the features described above or illustrated in the drawings are not required to be sequenced or arranged in the particular way described or illustrated. Other sequences and arrangements are possible.

Elements shown in the drawings may have the same reference number to suggest that the elements are similar. Alternatively, elements shown in the drawings may have different reference numbers to suggest that the elements are different. However, an element may be flexible enough to be present in some or all of the implementations described above or shown in the drawings. Various elements described herein or depicted in the drawings may be referred to as a first element, a second element, etc. It is arbitrary which element is designated the first element, the second element, and so on.

Details of an aforementioned example may apply to one or more embodiments. For instance, all optional instructions stored on the computer-readable medium may be implemented by the method described above. Further, the embodiments of the present techniques are not limited to those embodiments described herein or shown in the drawings. Logic flow diagrams and process flow diagrams have been used to illustrate embodiments. However, the present techniques are not limited to those diagrams or to the corresponding descriptions. For example, the sequences and processes exemplified in the diagrams do not need to progress through each box shown or in exactly the same order as illustrated.

The present techniques are not restricted to the particular details described herein. Those skilled in the art having the benefit of this disclosure will appreciate that many other variations of the foregoing description and accompanying drawings are possible and remain within the scope of the present techniques. Accordingly, it is the following claims and any amendments thereto that define the scope of the present techniques.

## Claims

1. At least one non-transitory computer-readable medium, comprising instructions to direct at least one processor to:
retrieve a phone number stored on a communication device (102);
initiate a reformatting sequence to reformat the phone number (104), wherein the reformatting sequence comprises a first logic sequence, a second logic sequence, a third logic sequence, and a fourth logic sequence;
execute a manual intervention sequence when the reformatting sequence is unable to reformat the phone number (106);
save a reformatted phone number to the communication device (108), wherein the reformatted phone number is in a global dialing format comprising a concatenation of an International Organization for Standardization country code and a local phone number in a destination country represented by the International Organization for Standardization country code and wherein the reformatted phone number is obtained from the reformatting sequence or from the manual intervention sequence;
initiate generation of a quick response code to share contact information associated with the reformatted phone number (110);
enable a user to select a quick response code icon on a home screen of the communication device;
enable the user to select an option from a quick response code menu that appears when the quick response code icon is selected, wherein the option generates the quick response code for export;
empty a list;
create a data structure by combining a set of data elements for the reformatted phone number;
insert the data structure into the list; and
generate the quick response code representing the list;
retrieve the local phone number from the reformatted phone number when the user selects the reformatted phone number (112);
initiate a call logic sequence (114), wherein the call logic sequence is a domestic call logic sequence or an international call logic sequence;
execute an authentication process (116), wherein an authenticated local phone number is obtained and wherein the authentication process comprises a verification test and a digit count test;
concatenate a dialing protocol and the authenticated local phone number (118), wherein a concatenated phone number is obtained;
save the phone number to a call log on the communication device (120), wherein the phone number is saved in the global dialing format; and
contact the concatenated phone number (122).

2. The at least one non-transitory computer-readable medium of claim 1, comprising instructions to:
initiate importing of a first quick response code that represents information about one or more contacts of another user;
enable the user to select the quick response code icon on the home screen of the communication device of the user (702);
enable the user to select a first option from the quick response code menu that appears when the quick response code icon is selected (704), wherein the first option allows the user to import contact information;
enable the user to scan the first quick response code displayed on a first communication device of the other user (706);
extract a first list from the first quick response code (708);
begin a loop (710);
extract a first data structure from the first list (712);
separate the first data structure into a first set of data elements (712);
attempt to authenticate a first phone number included in the first set of data elements (714);
determine if a first criterion is satisfied (716), wherein the first criterion is satisfied when the first phone number is authenticated,
wherein if the first criterion is satisfied,
add the first set of data elements to a database of quick response code generated contacts on the communication device of the user (718);
wherein if the first criterion is not satisfied (720),
display a manual correction screen;
enable the user to use the manual correction screen to correct the first phone number;
determine if a second criterion is satisfied (722), wherein the second criterion is satisfied when the user corrects the first phone number and wherein a corrected first phone number is obtained,
wherein if the second criterion is satisfied,
add the corrected first phone number to the database of quick response code generated contacts on the communication device of the user (718);
wherein if the second criterion is not satisfied,
discard the first phone number (724); and
repeat the loop until a last phone number from the first list is added to the database of quick response code generated contacts or is discarded.

3. The at least one non-transitory computer-readable medium of claim 1, comprising instructions to:
enable the user to select a first reformatted phone number to be called or texted (802), wherein the first reformatted phone number is a first concatenation of a first International Organization for Standardization country code for a country and a first local phone number in the country;
determine if a third criterion is satisfied (804), wherein the third criterion is satisfied when the first International Organization for Standardization country code for the country is the same as a second International Organization for Standardization country code for the current country,
wherein if the third criterion is satisfied,
initiate the domestic call logic sequence (806);
display a second concatenation of an internal dialing protocol and the first local phone number (808);
proceed to determine if a fourth criterion is satisfied;
wherein if the third criterion is not satisfied,
initiate the international call logic sequence (818);
display a third concatenation of an external dialing protocol and the first local phone number (820);
determine if a fourth criterion is satisfied (810), wherein the fourth criterion is satisfied when the user makes a phone call,
wherein if the fourth criterion is satisfied,
enable the user to dial the second concatenation when the domestic call logic sequence is initiated or the third concatenation when the international call logic sequence is initiated (812);
save the first reformatted phone number to the call log on the communication device (814);
initiate the phone call (816);
wherein if the fourth criterion is not satisfied,
open a default text application on the communication device (822);
enable the user to type a text message (824); and
send the text message (826).

4. The at least one non-transitory computer-readable medium of claim 3, comprising instructions to:
allow the user to select a second reformatted phone number to be called or texted, wherein the second reformatted phone number is a fourth concatenation of a third International Organization for Standardization country code for a first country and a second local phone number in the first country;
establish that the third International Organization for Standardization country code for the first country matches the second International Organization for Standardization country code for the current country;
initiate the domestic call logic sequence;
determine if a fifth criterion is satisfied (902), wherein the fifth criterion is satisfied when the first country uses a domestic carrier code,
wherein if the fifth criterion is satisfied,
determine if a sixth criterion is satisfied (904), wherein the sixth criterion is satisfied when the user has designated a default carrier,
wherein if the sixth criterion is satisfied,
proceed to determine if a seventh criterion is satisfied;
wherein if the sixth criterion is not satisfied,
prompt the user to select the default carrier (906);
determine if a seventh criterion is satisfied (908), wherein the seventh criterion is satisfied when the default carrier uses different logic for intra-city calls or texts and inter-city calls or texts,
wherein if the seventh criterion is satisfied,
determine if an eighth criterion is satisfied (910), wherein the eighth criterion is satisfied when an intra-city phone number is called or texted,
wherein if the eighth criterion is satisfied,
extract an intra-city code from a database containing dialing codes and prefixes (912);
capture the intra-city code, wherein a captured intra-city code is obtained;
proceed to authenticate the second local phone number;
wherein if the eighth criterion is not satisfied,
extract an inter-city code from the database containing dialing codes and prefixes (914);
capture the inter-city code, wherein a captured inter-city code is obtained;
proceed to authenticate the second local phone number;
wherein if the seventh criterion is not satisfied,
capture a default carrier code (916), wherein a captured default carrier code is obtained;
proceed to authenticate the second local phone number;
wherein if the fifth criterion is not satisfied,
determine if a ninth criterion is satisfied (918), wherein the ninth criterion is satisfied when the first country uses a trunk prefix,
wherein if the ninth criterion is satisfied,
determine if a tenth criterion is satisfied (920), wherein the tenth criterion is satisfied when the trunk prefix is different for calls or texts to mobile devices and calls or texts to land lines,
wherein if the tenth criterion is satisfied,
capture a mobile-device prefix or a land-line prefix from the database containing dialing codes and prefixes (926), wherein a captured mobile- device prefix or a captured land-line prefix is obtained;
proceed to authenticate the second local phone number;
wherein if the tenth criterion is not satisfied,
determine if an eleventh criterion is satisfied (924), wherein the eleventh criterion is satisfied when the first country uses a single-digit trunk plus await code,
wherein if the eleventh criterion is satisfied,
capture the single-digit trunk plus await code from the database containing dialing codes and prefixes and wherein a captured single-digit trunk plus await code is obtained;
program the captured single-digit trunk plus await code to pause dialing for five seconds (928);
proceed to authenticate the second local phone number;
wherein if the eleventh criterion is not satisfied,
capture the trunk prefix from the database containing dialing codes and prefixes (930), wherein a captured trunk prefix is obtained;
proceed to authenticate the second local phone number;
wherein if the ninth criterion is not satisfied,
authenticate the second local phone number (932);
determine if a twelfth criterion is satisfied (934), wherein the twelfth criterion is satisfied when the second local phone number passes a first verification test for the first country,
wherein if the twelfth criterion is satisfied,
determine if a thirteenth set of criteria is satisfied (936), wherein the thirteenth set of criteria is satisfied when the second local phone number conforms to a minimum rule and a maximum rule for the first country,
wherein if the thirteenth set of criteria is satisfied,
recognize that the second local phone number is authenticated, wherein an authenticated second local phone number is obtained;
concatenate a captured code or prefix and the authenticated second local phone number (940), wherein a domestic concatenation is obtained, and wherein the captured code or prefix is the captured intra-city code, the captured inter-city code, the captured default carrier code, the captured mobile- device prefix, the captured land-line prefix, the captured single-digit trunk plus await code, or the captured trunk prefix;
proceed to determine if a fourteenth criterion is satisfied;
wherein if the thirteenth set of criterion is not satisfied, reset a dialer;
wherein if the twelfth criterion is not satisfied,
reset the dialer (938);
determine if a fourteenth criterion is satisfied (942), wherein the fourteenth criterion is satisfied when the user initiates a first phone call,
wherein if the fourteenth criterion is satisfied,
display a destination city for the authenticated second local phone number (944);
enable the user to dial the domestic concatenation using a default phone application on the communication device (946);
save the second reformatted phone number to the call log on the communication device (948);
initiate the first phone call (950);
wherein if the fourteenth criterion is not satisfied,
open the default text application on the communication device and display the domestic concatenation (952);
enable the user to type a first text message (954); and
send the first text message (956).

5. The at least one non-transitory computer-readable medium of claim 3, comprising instructions to:
allow the user to select a third reformatted phone number to be called or texted, wherein the third reformatted phone number is a fifth concatenation of a fourth International Organization for Standardization country code for a second country and a third local phone number in the second country;
establish that the fourth International Organization for Standardization country code for the second country fails to match the second International Organization for Standardization country code for the current country (1002);
initiate the international call logic sequence (1004);
determine if a fifteenth criterion is satisfied (1006), wherein the fifteenth criterion is satisfied when the current country and the second country are in a same telecommunications alliance,
wherein if the fifteenth criterion is satisfied,
use an alliance rule logic to capture an alliance dialing code from the database containing dialing codes and prefixes (1008), wherein a captured alliance dialing code is obtained and wherein the captured alliance dialing code is a first external dialing protocol string;
proceed to enable the user to dial the third local phone number;
wherein if the fifteenth criterion is not satisfied,
determine if a sixteenth criterion is satisfied (1010), wherein the sixteenth criterion is satisfied when the current country uses an international carrier code,
wherein if the sixteenth criterion is satisfied,
capture the international carrier code from the database containing dialing codes and prefixes (1012), wherein a captured international carrier code is obtained;
proceed to determine if an eighteenth criterion is satisfied;
wherein if the sixteenth criterion is not satisfied,
determine if a seventeenth criterion is satisfied (1014), wherein the seventeenth criterion is satisfied when the current country uses a first single-digit trunk plus await code followed by an exit code for the current country,
wherein if the seventeenth criterion is satisfied,
capture the first single-digit trunk plus await code and the exit code from the database containing dialing codes and prefixes (1016), wherein a captured first single-digit trunk plus await code and the exit code are obtained;
program the captured first single-digit trunk plus await code to pause dialing for five seconds;
proceed to determine if an eighteenth criterion is satisfied;
wherein if the seventeenth criterion is not satisfied,
capture the exit code for the current country from the database containing dialing codes and prefixes (1018), wherein a captured exit code is obtained;
determine if an eighteenth criterion is satisfied (1020), wherein the eighteenth criterion is satisfied when the second country uses different entry codes for mobile devices and land lines,
wherein if the eighteenth criterion is satisfied,
capture an entry code for the second country from the database containing dialing codes and prefixes (1022);
concatenate a current country external dialing protocol, the entry code, and a mobile-device entry code or a land-line entry code, wherein a second external dialing protocol string is obtained and wherein the current country external dialing protocol is the captured international carrier code, the captured first single-digit trunk plus await code and the exit code, or the captured exit code (1022);
proceed to enable the user to dial the third local phone number;
wherein if the eighteenth criterion is not satisfied,
concatenate the current country external dialing protocol and the entry code (1024), wherein a third external dialing protocol string is obtained;
enable the user to dial the third local phone number (1026), wherein a dialed third local phone number is obtained;
authenticate the dialed third local phone number;
determine if a nineteenth criterion is satisfied (1028), wherein the nineteenth criterion is satisfied when the dialed third local phone number passes a second verification test for the second country,
wherein if the nineteenth criterion is satisfied,
determine if a twentieth set of criteria is satisfied (1030), wherein the twentieth set of criteria is satisfied when the dialed third local phone number conforms to a first minimum rule and a first maximum rule for the second country,
wherein if the twentieth set of criteria is satisfied,
recognize that the third local phone number is authenticated, wherein an authenticated third local phone number is obtained;
concatenate an external dialing protocol string and the authenticated third local phone number (1034), wherein an international concatenation is obtained and wherein the external dialing protocol string is the first external dialing protocol string, the second external dialing protocol string, or the third external dialing protocol string;
proceed to determine if a twenty-first criterion is satisfied;
wherein if the twentieth set of criteria is not satisfied,
establish that an incorrect phone number has been dialed;
reset the dialer (1032);
return to enable the user to dial the third local phone number;
wherein if the nineteenth criterion is not satisfied,
establish that a first incorrect phone number has been dialed;
reset the dialer (1032);
return to enable the user to dial the third local phone number;
determine if a twenty-first criterion is satisfied (1036), wherein the twenty-first criterion is satisfied when the user initiates a second phone call,
wherein if the twenty-first criterion is satisfied,
display a first destination city for the authenticated third local phone number (1038);
enable the user to dial the international concatenation using the default phone application on the communication device (1040);
save the third reformatted phone number to the call log on the communication device (1042);
initiate the second phone call (1044);
wherein if the twenty-first criterion is not satisfied,
open the default text application on the communication device and display the international concatenation (1046);
enable the user to type a second text message (1048); and
send the second text message (1050).

6. The at least one non-transitory computer-readable medium of claim 5, comprising instructions to:
initiate the alliance rule logic;
identify a common telecommunications alliance by comparing a record for the current country and a first record for a third country in the database containing dialing codes and prefixes (1102);
capture a first alliance dialing code from the first record for the third country (1104), wherein-a captured first alliance dialing code is obtained;
enable the user to dial a fourth local phone number in the third country (1106), wherein a dialed fourth local phone number is obtained;
authenticate the dialed fourth local phone number;
determine if a twenty-second criterion is satisfied (1108), wherein the twenty-second criterion is satisfied when the dialed fourth local phone number passes a third verification test for the third country,
wherein if the twenty-second criterion is satisfied,
determine if a twenty-third set of criteria is satisfied (1110), wherein the twenty-third set of criteria is satisfied when the dialed fourth local phone number conforms to a second minimum rule and a second maximum rule for the third country;
wherein if the twenty-third set of criteria is satisfied,
recognize that the fourth local phone number is authenticated, wherein an authenticated fourth local phone number is obtained;
concatenate the captured first alliance dialing code and the authenticated fourth local phone number, wherein an alliance concatenation is obtained;
proceed to determine if a twenty-fourth criterion is satisfied;
wherein if the twenty-third set of criteria is not satisfied,
establish that a second incorrect phone number has been dialed; reset the dialer;
return to enable the user to dial the fourth local phone number;
wherein if the twenty-second criterion is not satisfied,
establish that a third incorrect phone number has been dialed;
reset the dialer (1112);
return to enable the user to dial the fourth local phone number;
determine if a twenty-fourth criterion is satisfied (1114), wherein the twenty-fourth criterion is satisfied when the user initiates a third phone call,
wherein if the twenty-fourth criterion is satisfied,
display a second destination city for the authenticated fourth local phone number (1116);
enable the user to dial the alliance concatenation using the default phone application on the communication device (1118);
save a fourth reformatted phone number to the call log on the communication device (1120), wherein the fourth reformatted phone number contains the fourth local phone number in the third country;
initiate the third phone call to the alliance concatenation (1122);
wherein if the twenty-fourth criterion is not satisfied,
open the default text application on the communication device and display the alliance concatenation (1124);
enable the user to type a third text message (1126); and
send the third text message to the alliance concatenation (1128).

## Patentansprüche

1. Mindestens ein nichtflüchtiges computerlesbares Medium, umfassend Anweisungen, um mindestens einen Prozessor zu Folgendem anzuweisen:
Abrufen einer auf einer Kommunikationsvorrichtung gespeicherten Telefonnummer (102);
Initiieren einer Umformatierungssequenz, um die Telefonnummer umzuformatieren (104), wobei die Umformatierungssequenz eine erste Logiksequenz, eine zweite Logiksequenz, eine dritte Logiksequenz und eine vierte Logiksequenz umfasst;
Ausführen einer manuellen Eingriffssequenz (106), wenn die Umformatierungssequenz nicht in der Lage ist, die Telefonnummer umzuformatieren;
Speichern einer umformatierten Telefonnummer in der Kommunikationsvorrichtung (108), wobei die umformatierte Telefonnummer in einem globalen Wählformat vorliegt, das eine Verkettung eines Ländercodes der Internationalen Organisation für Normung und einer lokalen Telefonnummer in einem Bestimmungsland umfasst, das durch den Ländercode der Internationalen Organisation für Normung repräsentiert wird, und wobei die umformatierte Telefonnummer aus der Umformatierungssequenz oder aus der manuellen Eingriffssequenz erhalten wird;
Initiieren der Erzeugung eines Quick-Response-Codes zum Teilen von Kontaktinformationen, die der umformatierten Telefonnummer zugeordnet sind (110);
Ermöglichen für einen Benutzer, ein Quick-Response-Code-Symbol auf einem Startbildschirm der Kommunikationsvorrichtung auszuwählen;
Ermöglichen für den Benutzer, eine Option aus einem Quick-Response-Code-Menü auszuwählen, das erscheint, wenn das Quick-Response-Code-Symbol ausgewählt wird, wobei die Option den Quick-Response-Code für den Export erzeugt;
Leeren einer Liste;
Erzeugen einer Datenstruktur durch Kombinieren eines Satzes von Datenelementen für die umformatierte Telefonnummer;
Einfügen der Datenstruktur in die Liste; und
Erzeugen des Quick-Response-Codes, der die Liste darstellt;
Abrufen der lokalen Telefonnummer aus der umformatierten Telefonnummer (112), wenn der Benutzer die umformatierte Telefonnummer auswählt;
Initiieren einer Anruflogiksequenz (114), wobei die Anruflogiksequenz eine Inlandsanruflogiksequenz oder eine Auslandsanruflogiksequenz ist;
Ausführen eines Authentifizierungsprozesses (116), wobei eine authentifizierte lokale Telefonnummer erhalten wird und wobei der Authentifizierungsprozess einen Verifizierungstest und einen Ziffernzähltest umfasst;
Verketten eines Wählprotokolls und der authentifizierten lokalen Telefonnummer (118), wobei eine verkettete Telefonnummer erhalten wird;
Speichern der Telefonnummer in einem Anrufprotokoll auf der Kommunikationsvorrichtung (120), wobei die Telefonnummer im globalen Wählformat gespeichert wird; und
Kontaktieren der verketteten Telefonnummer (122).

2. Mindestens ein nichtflüchtiges computerlesbares Medium nach Anspruch 1, umfassend Anweisungen zum:
Initiieren des Importierens eines ersten Quick-Response-Codes, der Informationen über einen oder mehrere Kontakte eines anderen Benutzers repräsentiert;
Ermöglichen für den Benutzer, das Quick-Response-Code-Symbol auf dem Startbildschirm der Kommunikationsvorrichtung des Benutzers auszuwählen (702);
Ermöglichen für den Benutzer, eine erste Option aus dem Quick-Response-Code-Menü auszuwählen, das erscheint, wenn das Quick-Response-Code-Symbol ausgewählt wird (704), wobei die erste Option es dem Benutzer ermöglicht, Kontaktinformationen zu importieren;
Ermöglichen für den Benutzer, den ersten Quick-Response-Code zu scannen, der auf einer ersten Kommunikationsvorrichtung des anderen Benutzers angezeigt wird (706);
Extrahieren einer ersten Liste aus dem ersten Quick-Response-Code (708);
Beginnen einer Schleife (710);
Extrahieren einer ersten Datenstruktur aus der ersten Liste (712);
Trennen der ersten Datenstruktur in einen ersten Satz von Datenelementen (712);
Versuchen, eine erste Telefonnummer zu authentifizieren, die in dem ersten Satz von Datenelementen (714) enthalten ist;
Bestimmen, ob ein erstes Kriterium erfüllt ist (716), wobei das erste Kriterium erfüllt ist, wenn die erste Telefonnummer authentifiziert wird,
wobei, wenn das erste Kriterium erfüllt ist,
Hinzufügen des ersten Satzes von Datenelementen zu einer Datenbank von durch Quick-Response-Code erzeugten Kontakten auf der Kommunikationsvorrichtung des Benutzers (718);
wobei, wenn das erste Kriterium nicht erfüllt ist (720),
Anzeigen eines manuellen Korrekturbildschirms;
Ermöglichen für den Benutzer, den manuellen Korrekturbildschirm zu verwenden, um die erste Telefonnummer zu korrigieren;
Bestimmen, ob ein zweites Kriterium erfüllt ist (722), wobei das zweite Kriterium erfüllt ist, wenn der Benutzer die erste Telefonnummer korrigiert, und wobei eine korrigierte erste Telefonnummer erhalten wird,
wobei, wenn das zweite Kriterium erfüllt ist,
Hinzufügen der korrigierten ersten Telefonnummer zu der Datenbank von durch Quick-Response-Code erzeugten Kontakten auf der Kommunikationsvorrichtung des Benutzers (718);
wobei, wenn das zweite Kriterium nicht erfüllt ist,
Verwerfen der ersten Telefonnummer (724); und
Wiederholen der Schleife, bis eine letzte Telefonnummer aus der ersten Liste zu der Datenbank der durch Quick-Response-Code erzeugten Kontakte hinzugefügt oder verworfen wird.

3. Mindestens ein nichtflüchtiges computerlesbares Medium nach Anspruch 1, umfassend Anweisungen zum:
Ermöglichen für den Benutzer, eine erste umformatierte Telefonnummer auszuwählen, die angerufen oder per Textnachricht kontaktiert werden soll (802), wobei die erste umformatierte Telefonnummer eine erste Verkettung eines ersten Ländercodes der Internationalen Organisation für Normung für ein Land und einer ersten lokalen Telefonnummer in dem Land ist;
Bestimmen, ob ein drittes Kriterium erfüllt ist (804), wobei das dritte Kriterium erfüllt ist, wenn der erste Ländercode der Internationalen Organisation für Normung für das Land gleich einem zweiten Ländercode der Internationalen Organisation für Normung für das aktuelle Land ist,
wobei, wenn das dritte Kriterium erfüllt ist,
Initiieren der Logiksequenz für Inlandsanrufe (806);
Anzeigen einer zweiten Verkettung eines internen Wählprotokolls und der ersten lokalen Telefonnummer (808);
Fortfahren, um zu bestimmen, ob ein viertes Kriterium erfüllt ist;
wobei, wenn das dritte Kriterium nicht erfüllt ist,
Initiieren der internationalen Anruflogiksequenz (818);
Anzeigen einer dritten Verkettung eines externen Wählprotokolls und der ersten lokalen Telefonnummer (820);
Bestimmen, ob ein viertes Kriterium erfüllt ist (810), wobei das vierte Kriterium erfüllt ist, wenn der Benutzer einen Telefonanruf tätigt,
wobei, wenn das vierte Kriterium erfüllt ist,
Ermöglichen für den Benutzer, die zweite Verkettung, wenn die Logiksequenz für Inlandsanrufe initiiert wird, oder die dritte Verkettung zu wählen, wenn die Logiksequenz für Auslandsanrufe initiiert wird (812);
Speichern der ersten umformatierten Telefonnummer in dem Anrufprotokoll auf der Kommunikationsvorrichtung (814);
Initiieren des Telefonanrufs (816);
wobei, wenn das vierte Kriterium nicht erfüllt ist,
Öffnen einer Standard-Textanwendung auf der Kommunikationsvorrichtung (822);
Ermöglichen für den Benutzer, eine Textnachricht einzugeben (824); und
Senden der Textnachricht (826).

4. Mindestens ein nichtflüchtiges computerlesbares Medium nach Anspruch 3, umfassend Anweisungen zum:
Ermöglichen für den Benutzer, eine zweite umformatierte Telefonnummer auszuwählen, die angerufen oder per Textnachricht kontaktiert werden soll, wobei die zweite umformatierte Telefonnummer eine vierte Verkettung eines dritten Ländercodes der Internationalen Organisation für Normung für ein erstes Land und einer zweiten lokalen Telefonnummer in dem ersten Land ist;
Feststellen, dass der dritte Ländercode der Internationalen Organisation für Normung für das erste Land mit dem zweiten Ländercode der Internationalen Organisation für Normung für das aktuelle Land übereinstimmt;
Initiieren der Logiksequenz für Inlandsanrufe;
Bestimmen, ob ein fünftes Kriterium erfüllt ist (902), wobei das fünfte Kriterium erfüllt ist, wenn das erste Land eine inländische Verbindungsnetzbetreiberkennzahl verwendet,
wobei, wenn das fünfte Kriterium erfüllt ist,
Bestimmen, ob ein sechstes Kriterium erfüllt ist (904), wobei das sechste Kriterium erfüllt ist, wenn der Benutzer einen Standardträger bestimmt hat,
wobei, wenn das sechste Kriterium erfüllt ist,
Fortfahren, um zu bestimmen, ob ein siebtes Kriterium erfüllt ist;
wobei, wenn das sechste Kriterium nicht erfüllt ist,
Auffordern des Benutzers, den Standardträger (906) auszuwählen;
Bestimmen, ob ein siebtes Kriterium erfüllt ist (908), wobei das siebte Kriterium erfüllt ist, wenn der Standardträger unterschiedliche Logik für innerstädtische Anrufe oder Textnachrichten und zwischenstädtische Anrufe oder Textnachrichten verwendet,
wobei, wenn das siebte Kriterium erfüllt ist,
Bestimmen, ob ein achtes Kriterium erfüllt ist (910), wobei das achte Kriterium erfüllt ist, wenn eine innerstädtische Telefonnummer angerufen oder per Textnachricht kontaktiert wird,
wobei, wenn das achte Kriterium erfüllt ist,
Extrahieren eines innerstädtischen Codes aus einer Datenbank, die Vorwahlen und Verkehrsausscheidungsziffern enthält (912);
Erfassen des innerstädtischen Codes, wobei ein erfasster innerstädtischer Code erhalten wird;
Fortfahren, um die zweite lokale Telefonnummer zu authentifizieren;
wobei, wenn das achte Kriterium nicht erfüllt ist,
Extrahieren eines zwischenstädtischen Codes aus der Datenbank, die Vorwahlen und Verkehrsausscheidungsziffern enthält (914);
Erfassen des zwischenstädtischen Codes, wobei ein erfasster zwischenstädtischer Code erhalten wird;
Fortfahren, um die zweite lokale Telefonnummer zu authentifizieren;
wobei, wenn das siebte Kriterium nicht erfüllt ist,
Erfassen eines Standardträgercodes (916), wobei ein erfasster Standardträgercode erhalten wird;
Fortfahren, um die zweite lokale Telefonnummer zu authentifizieren;
wobei, wenn das fünfte Kriterium nicht erfüllt ist,
Bestimmen, ob ein neuntes Kriterium erfüllt ist (918), wobei das neunte Kriterium erfüllt ist, wenn das erste Land eine Amtsverkehrsausscheidungsziffer verwendet,
wobei, wenn das neunte Kriterium erfüllt ist,
Bestimmen, ob ein zehntes Kriterium erfüllt ist (920), wobei das zehnte Kriterium erfüllt ist, wenn die Amtsverkehrsausscheidungsziffer für Anrufe oder Textnachrichten an mobile Vorrichtungen und Anrufe oder Textnachrichten an Festnetzleitungen unterschiedlich ist,
wobei, wenn das zehnte Kriterium erfüllt ist,
Erfassen einer Verkehrsausscheidungsziffer für mobile Vorrichtungen oder einer Verkehrsausscheidungsziffer für das Festnetz aus der Datenbank, die Vorwahlen und Verkehrsausscheidungsziffern (926) enthält, wobei eine erfasste Verkehrsausscheidungsziffer für mobile Vorrichtungen oder eine erfasste Verkehrsausscheidungsziffer für das Festnetz erhalten wird;
Fortfahren, um die zweite lokale Telefonnummer zu authentifizieren;
wobei, wenn das zehnte Kriterium nicht erfüllt ist,
Bestimmen, ob ein elftes Kriterium erfüllt ist (924), wobei das elfte Kriterium erfüllt ist, wenn das erste Land einen einstelligen Verbindungsleitung-plus-Await-Code verwendet,
wobei, wenn das elfte Kriterium erfüllt ist,
Erfassen des einstelligen Amt-plus-Await-Codes aus der Datenbank, die Vorwahlen und Verkehrsausscheidungsziffern enthält, und wobei ein erfasster einstelliger Amt-plus-Await-Code erhalten wird;
Programmieren des erfassten einstelligen Verbindungsleitung-plus-Await-Codes, um das Wählen für fünf Sekunden zu pausieren (928);
Fortfahren, um die zweite lokale Telefonnummer zu authentifizieren;
wobei, wenn das elfte Kriterium nicht erfüllt ist,
Erfassen der Amtsverkehrsausscheidungsziffer aus der Datenbank, die Vorwahlen und Verkehrsausscheidungsziffern (930) enthält, wobei eine erfasste Amtsverkehrsausscheidungsziffer erhalten wird;
Fortfahren, um die zweite lokale Telefonnummer zu authentifizieren;
wobei, wenn das neunte Kriterium nicht erfüllt ist,
Authentifizieren der zweiten lokalen Telefonnummer (932);
Bestimmen, ob ein zwölftes Kriterium erfüllt ist (934), wobei das zwölfte Kriterium erfüllt ist, wenn die zweite lokale Telefonnummer einen ersten Verifizierungstest für das erste Land besteht,
wobei, wenn das zwölfte Kriterium erfüllt ist,
Bestimmen, ob ein dreizehnter Satz von Kriterien erfüllt ist (936), wobei der dreizehnte Satz von Kriterien erfüllt ist, wenn die zweite lokale Telefonnummer einer Minimumregel und einer Maximumregel für das erste Land entspricht,
wobei, wenn der dreizehnte Satz von Kriterien erfüllt ist,
Erkennen, dass die zweite lokale Telefonnummer authentifiziert ist, wobei eine authentifizierte zweite lokale Telefonnummer erhalten wird;
Verketten eines erfassten Codes oder einer erfassten Verkehrsausscheidungsziffer und der authentifizierten zweiten lokalen Telefonnummer (940), wobei eine inländische Verkettung erhalten wird, und wobei der erfasste Code oder die erfasste Verkehrsausscheidungsziffer der erfasste innerstädtische Code, der erfasste zwischenstädtische Code, der erfasste Standardträgercode, die erfasste Verkehrsausscheidungsziffer für mobile Vorrichtungen, die erfasste Verkehrsausscheidungsziffer für das Festnetz, der erfasste einstellige Amt-plus-Await-Code oder die erfasste Amtsverkehrsausscheidungsziffer ist;
Fortfahren, um zu bestimmen, ob ein vierzehntes Kriterium erfüllt ist;
wobei, wenn der dreizehnte Kriteriensatz nicht erfüllt ist, Zurücksetzen einer Wählvorrichtung;
wobei, wenn das zwölfte Kriterium nicht erfüllt ist,
Zurücksetzens der Wählvorrichtung (938);
Bestimmen, ob ein vierzehntes Kriterium erfüllt ist (942), wobei das vierzehnte Kriterium erfüllt ist, wenn der Benutzer einen ersten Telefonanruf initiiert,
wobei, wenn das vierzehnte Kriterium erfüllt ist,
Anzeigen einer Zielstadt für die authentifizierte zweite lokale Telefonnummer (944);
Ermöglichen für den Benutzer, die inländische Verkettung unter Verwendung einer Standard-Telefonanwendung auf der Kommunikationsvorrichtung (946) zu wählen;
Speichern der zweiten umformatierten Telefonnummer in dem Anrufprotokoll auf der Kommunikationsvorrichtung (948);
Initiieren des ersten Telefonanrufs (950);
wobei, wenn das vierzehnte Kriterium nicht erfüllt ist,
Öffnen der Standardtextanwendung auf der Kommunikationsvorrichtung und Anzeigen der inländischen Verkettung (952);
Ermöglichen für den Benutzer, eine erste Textnachricht (954) einzugeben; und
Senden der ersten Textnachricht (956).

5. Mindestens ein nichtflüchtiges computerlesbares Medium nach Anspruch 3, umfassend Anweisungen zum:
Ermöglichen für den Benutzer, eine dritte umformatierte Telefonnummer auszuwählen, die angerufen oder per Textnachricht kontaktiert werden soll, wobei die dritte umformatierte Telefonnummer eine fünfte Verkettung eines vierten Ländercodes der Internationalen Organisation für Normung für ein zweites Land und einer dritten lokalen Telefonnummer in dem zweiten Land ist;
Feststellen, dass der vierte Ländercode der Internationalen Organisation für Normung für das zweite Land nicht mit dem zweiten Ländercode der Internationalen Organisation für Normung für das aktuelle Land übereinstimmt (1002);
Initiieren der internationalen Anruflogiksequenz (1004);
Bestimmen, ob ein fünfzehntes Kriterium erfüllt ist (1006), wobei das fünfzehnte Kriterium erfüllt ist, wenn das aktuelle Land und das zweite Land in derselben Telekommunikationsallianz sind,
wobei, wenn das fünfzehnte Kriterium erfüllt ist,
Verwenden einer Allianz-Regellogik, um eine Allianz-Vorwahl aus der Datenbank zu erfassen, die Vorwahlen und Verkehrsausscheidungsziffern (1008) enthält, wobei eine erfasste Allianz-Vorwahl erhalten wird und wobei die erfasste Allianz-Vorwahl eine erste externe Wählprotokollzeichenfolge ist;
Fortfahren, um dem Benutzer zu ermöglichen, die dritte lokale Telefonnummer zu wählen;
wobei, wenn das fünfzehnte Kriterium nicht erfüllt ist,
Bestimmen, ob ein sechzehntes Kriterium erfüllt ist (1010), wobei das sechzehnte Kriterium erfüllt ist, wenn das aktuelle Land einen internationalen Trägercode verwendet, wobei, wenn das sechzehnte Kriterium erfüllt ist,
Erfassen des internationalen Trägercodes aus der Datenbank, die Vorwahlen und Verkehrsausscheidungsziffern (1012) enthält, wobei ein erfasster internationaler Trägercode erhalten wird;
Fortfahren, um zu bestimmen, ob ein achtzehntes Kriterium erfüllt ist;
wobei, wenn das sechzehnte Kriterium nicht erfüllt ist,
Bestimmen, ob ein siebzehntes Kriterium erfüllt ist (1014), wobei das siebzehnte Kriterium erfüllt ist, wenn das aktuelle Land einen ersten einstelligen Verbindungsleitung-plus-Await-Code gefolgt von einem Ausgangscode für das aktuelle Land verwendet,
wobei, wenn das siebzehnte Kriterium erfüllt ist,
Erfassen des ersten einstelligen Verbindungsleitung-plus-Await-Codes und des Exit-Codes aus der Datenbank, die Vorwahlen und Verkehrsausscheidungsziffern (1016) enthält, wobei ein erfasster erster einstelliger Amt-plus-Await-Code und der Exit-Code erhalten werden;
Programmieren des erfassten ersten einstelligen Amt-plus-Await-Codes, um den Wählvorgang für fünf Sekunden zu pausieren;
Fortfahren, um zu bestimmen, ob ein achtzehntes Kriterium erfüllt ist;
wobei, wenn das siebzehnte Kriterium nicht erfüllt ist,
Erfassen des Exit-Codes für das aktuelle Land aus der Datenbank, die Vorwahlen und Verkehrsausscheidungsziffern (1018) enthält, wobei ein erfasster Exit-Code erhalten wird;
Bestimmen, ob ein achtzehntes Kriterium erfüllt ist (1020), wobei das achtzehnte Kriterium erfüllt ist, wenn das zweite Land unterschiedliche Entry-Codes für mobile Vorrichtungen und Festnetzanschlüsse verwendet,
wobei, wenn das achtzehnte Kriterium erfüllt ist,
Erfassen eines Entry-Codes für das zweite Land aus der Datenbank, die Vorwahlen und Verkehrsausscheidungsziffern enthält (1022);
Verketten eines externen Wählprotokolls für das aktuelle Land, den Entry-Code und einen Entry-Code für mobile Vorrichtungen oder einen Entry-Code für Festnetzanschlüsse, wobei eine zweite externe Wählprotokollzeichenfolge erhalten wird und wobei das externe Wählprotokoll für das aktuelle Land der erfasste internationale Trägercode, der erfasste erste einstellige Amt-plus-Await-Code und der Exit-Code oder der erfasste Exit-Code (1022) ist;
Fortfahren, um dem Benutzer zu ermöglichen, die dritte lokale Telefonnummer zu wählen;
wobei, wenn das achtzehnte Kriterium nicht erfüllt ist,
Verketten des externen Wählprotokolls für das aktuelle Land und des Entry-Codes (1024), wobei eine dritte externe Wählprotokollzeichenfolge erhalten wird;
Ermöglichen für den Benutzer, die dritte lokale Telefonnummer (1026) zu wählen, wobei eine gewählte dritte lokale Telefonnummer erhalten wird;
Authentifizieren der gewählten dritten lokalen Telefonnummer;
Bestimmen, ob ein neunzehntes Kriterium erfüllt ist (1028), wobei das neunzehnte Kriterium erfüllt ist, wenn die gewählte dritte lokale Telefonnummer einen zweiten Verifizierungstest für das zweite Land besteht,
wobei, wenn das neunzehnte Kriterium erfüllt ist,
Bestimmen, ob ein zwanzigster Satz von Kriterien erfüllt ist (1030), wobei der zwanzigste Satz von Kriterien erfüllt ist, wenn die gewählte dritte lokale Telefonnummer einer ersten Minimalregel und einer ersten Maximalregel für das zweite Land entspricht,
wobei, wenn der zwanzigste Satz von Kriterien erfüllt ist,
Erkennen, dass die dritte lokale Telefonnummer authentifiziert ist, wobei eine authentifizierte dritte lokale Telefonnummer erhalten wird;
Verketten einer externen Wählprotokollzeichenfolge und der authentifizierten dritten lokalen Telefonnummer (1034), wobei eine internationale Verkettung erhalten wird und wobei die externe Wählprotokollzeichenfolge die erste externe Wählprotokollzeichenfolge, die zweite externe Wählprotokollzeichenfolge oder die dritte externe Wählprotokollzeichenfolge ist;
Fortfahren, um zu bestimmen, ob ein einundzwanzigstes Kriterium erfüllt ist;
wobei, wenn der zwanzigste Satz von Kriterien nicht erfüllt ist,
Feststellen, dass eine falsche Telefonnummer gewählt wurde;
Zurücksetzens der Wählvorrichtung (1032);
Zurückkehren, um es dem Benutzer zu ermöglichen, die dritte lokale Telefonnummer zu wählen; wobei, wenn das neunzehnte Kriterium nicht erfüllt ist,
Feststellen, dass eine erste falsche Telefonnummer gewählt wurde;
Zurücksetzens der Wählvorrichtung (1032);
Zurückkehren, um es dem Benutzer zu ermöglichen, die dritte lokale Telefonnummer zu wählen;
Bestimmen, ob ein einundzwanzigstes Kriterium erfüllt ist (1036), wobei das einundzwanzigste Kriterium erfüllt ist, wenn der Benutzer einen zweiten Telefonanruf initiiert, wobei, wenn das einundzwanzigste Kriterium erfüllt ist,
Anzeigen einer ersten Zielstadt für die authentifizierte dritte lokale Telefonnummer (1038);
Ermöglichen für den Benutzer, die internationale Verkettung unter Verwendung der Standardtelefonanwendung auf der Kommunikationsvorrichtung zu wählen (1040);
Speichern der dritten umformatierten Telefonnummer in dem Anrufprotokoll auf der Kommunikationsvorrichtung (1042);
Initiieren des zweiten Telefonanrufs (1044);
wobei, wenn das einundzwanzigste Kriterium nicht erfüllt ist,
Öffnen der Standardtextanwendung auf der Kommunikationsvorrichtung und Anzeigen der internationalen Verkettung (1046);
Ermöglichen für den Benutzer, eine zweite Textnachricht (1048) einzugeben; und
Senden der zweiten Textnachricht (1050).

6. Mindestens ein nichtflüchtiges computerlesbares Medium nach Anspruch 5, umfassend Anweisungen zum:
Initiieren der Allianz-Regellogik;
Identifizieren einer gemeinsamen Telekommunikationsallianz durch Vergleichen eines Datensatzes für das aktuelle Land und eines ersten Datensatzes für ein drittes Land in der Datenbank, die Vorwahlen und Verkehrsausscheidungsziffern enthält (1102);
Erfassen einer ersten Allianz-Vorwahl aus dem ersten Datensatz für das dritte Land (1104), wobei eine erfasste erste Allianz-Vorwahl erhalten wird;
Ermöglichen für den Benutzer, eine vierte lokale Telefonnummer in dem dritten Land (1106) zu wählen, wobei eine gewählte vierte lokale Telefonnummer erhalten wird;
Authentifizieren der gewählten vierten lokalen Telefonnummer;
Bestimmen, ob ein zweiundzwanzigstes Kriterium erfüllt ist (1108), wobei das zweiundzwanzigste Kriterium erfüllt ist, wenn die gewählte vierte lokale Telefonnummer einen dritten Verifizierungstest für das dritte Land besteht,
wobei, wenn das zweiundzwanzigste Kriterium erfüllt ist,
Bestimmen, ob ein dreiundzwanzigster Satz von Kriterien erfüllt ist (1110), wobei der dreiundzwanzigste Satz von Kriterien erfüllt ist, wenn die gewählte vierte lokale Telefonnummer einer zweiten Minimumregel und einer zweiten Maximumregel für das dritte Land entspricht;
wobei, wenn der dreiundzwanzigste Kriteriensatz erfüllt ist,
Erkennen, dass die vierte lokale Telefonnummer authentifiziert ist, wobei eine authentifizierte vierte lokale Telefonnummer erhalten wird;
Verketten der erfassten ersten Allianz-Vorwahl und der authentifizierten vierten lokalen Telefonnummer, wobei eine Allianz-Verkettung erhalten wird;
Fortfahren, um zu bestimmen, ob ein vierundzwanzigstes Kriterium erfüllt ist;
wobei, wenn der dreiundzwanzigste Satz von Kriterien nicht erfüllt ist,
Feststellen, dass eine zweite falsche Telefonnummer gewählt wurde; Zurücksetzen der Wählvorrichtung;
Zurückkehren, um es dem Benutzer zu ermöglichen, die vierte lokale Telefonnummer zu wählen;
wobei, wenn das zweiundzwanzigste Kriterium nicht erfüllt ist,
Feststellen, dass eine dritte falsche Telefonnummer gewählt wurde;
Zurücksetzens der Wählvorrichtung (1112);
Zurückkehren, um es dem Benutzer zu ermöglichen, die vierte lokale Telefonnummer zu wählen;
Bestimmen, ob ein vierundzwanzigstes Kriterium erfüllt ist (1114), wobei das vierundzwanzigste Kriterium erfüllt ist, wenn der Benutzer einen dritten Telefonanruf initiiert,
wobei, wenn das vierundzwanzigste Kriterium erfüllt ist,
Anzeigen einer zweiten Zielstadt für die authentifizierte vierte lokale Telefonnummer (1116);
Ermöglichen für den Benutzer, die Allianz-Verkettung unter Verwendung der Standardtelefonanwendung auf der Kommunikationsvorrichtung (1118) zu wählen;
Speichern einer vierten umformatierten Telefonnummer in dem Anrufprotokoll auf der Kommunikationsvorrichtung (1120), wobei die vierte umformatierte Telefonnummer die vierte lokale Telefonnummer in dem dritten Land enthält;
Initiieren des dritten Telefonanrufs an die Allianz-Verkettung (1122);
wobei, wenn das vierundzwanzigste Kriterium nicht erfüllt ist,
Öffnen der Standardtextanwendung auf der Kommunikationsvorrichtung und Anzeigen der Allianz-Verkettung (1124);
Ermöglichen für den Benutzer eine dritte Textnachricht (1126) einzugeben; und
Senden der dritten Textnachricht an die Allianz-Verkettung (1128).

## Revendications

1. Support ou supports non transitoires lisibles par ordinateur, comprenant des instructions pour amener au moins un processeur à :
récupérer un numéro de téléphone stocké sur un dispositif de communication (102) ;
lancer une séquence de reformatage pour reformater le numéro de téléphone (104), dans lesquels la séquence de reformatage comprend une première séquence logique, une deuxième séquence logique, une troisième séquence logique et une quatrième séquence logique ;
exécuter une séquence d'intervention manuelle lorsque la séquence de reformatage est incapable de reformater le numéro de téléphone (106) ;
enregistrer un numéro de téléphone reformaté dans le dispositif de communication (108), dans lesquels le numéro de téléphone reformaté est dans un format de numérotation mondial comprenant une concaténation d'un indicatif de pays de l'Organisation internationale de normalisation et d'un numéro de téléphone local dans un pays de destination représenté par l'indicatif de pays de l'Organisation internationale de normalisation et dans lesquels le numéro de téléphone reformaté est obtenu à partir de la séquence de reformatage ou à partir de la séquence d'intervention manuelle ;
lancer la génération d'un code à réponse rapide pour partager des informations de contact associées au numéro de téléphone reformaté (110) ;
permettre à un utilisateur de sélectionner une icône de code à réponse rapide sur un écran d'accueil du dispositif de communication ;
permettre à l'utilisateur de sélectionner une option à partir d'un menu de code à réponse rapide qui apparaît lorsque l'icône de code à réponse rapide est sélectionnée, dans lesquels l'option génère le code à réponse rapide pour l'exportation ;
vider une liste ;
créer une structure de données en combinant un ensemble d'éléments de données pour le numéro de téléphone reformaté ;
insérer la structure de données dans la liste ; et
générer le code à réponse rapide représentant la liste ;
récupérer le numéro de téléphone local à partir du numéro de téléphone reformaté lorsque l'utilisateur sélectionne le numéro de téléphone reformaté (112) ;
lancer une séquence de logique d'appel (114), dans lesquels la séquence de logique d'appel est une séquence de logique d'appel national ou une séquence de logique d'appel international ;
exécuter un processus d'authentification (116), dans lesquels un numéro de téléphone local authentifié est obtenu et dans lesquels le processus d'authentification comprend un test de vérification et un test de comptage de chiffres ;
concaténer un protocole de numérotation et le numéro de téléphone local authentifié (118), dans lesquels un numéro de téléphone concaténé est obtenu ;
enregistrer le numéro de téléphone dans un journal des appels sur le dispositif de communication (120), dans lesquels le numéro de téléphone est enregistré dans le format de numérotation mondial ; et
contacter le numéro de téléphone concaténé (122).

2. Support ou supports non transitoires lisibles par ordinateur selon la revendication 1, comprenant des instructions pour :
lancer une importation d'un premier code à réponse rapide qui représente des informations concernant un ou plusieurs contacts d'un autre utilisateur ;
permettre à l'utilisateur de sélectionner l'icône de code à réponse rapide sur l'écran d'accueil du dispositif de communication de l'utilisateur (702) ;
permettre à l'utilisateur de sélectionner une première option dans le menu de code à réponse rapide qui apparaît lorsque l'icône de code à réponse rapide est sélectionnée (704), dans lesquels la première option permet à l'utilisateur d'importer des informations de contact ;
permettre à l'utilisateur de balayer le premier code à réponse rapide affiché sur un premier dispositif de communication de l'autre utilisateur (706) ;
extraire une première liste du premier code à réponse rapide (708) ;
commencer une boucle (710) ;
extraire une première structure de données de la première liste (712) ;
séparer la première structure de données en un premier ensemble d'éléments de données (712) ;
tenter d'authentifier un premier numéro de téléphone inclus dans le premier ensemble d'éléments de données (714) ;
déterminer si un premier critère est satisfait (716), dans lesquels le premier critère est satisfait lorsque le premier numéro de téléphone est authentifié,
dans lesquels si le premier critère est satisfait,
ajouter le premier ensemble d'éléments de données à une base de données de contacts générés par code à réponse rapide sur le dispositif de communication de l'utilisateur (718) ;
dans lesquels si le premier critère n'est pas satisfait (720),
afficher un écran de correction manuelle ;
permettre à l'utilisateur d'utiliser l'écran de correction manuelle pour corriger le premier numéro de téléphone ;
déterminer si un deuxième critère est satisfait (722), dans lesquels le deuxième critère est satisfait lorsque l'utilisateur corrige le premier numéro de téléphone et dans lesquels un premier numéro de téléphone corrigé est obtenu,
dans lesquels si le deuxième critère est satisfait,
ajouter le premier numéro de téléphone corrigé à la base de données de contacts générés par code à réponse rapide sur le dispositif de communication de l'utilisateur (718) ;
dans lesquels si le deuxième critère n'est pas satisfait,
rejeter le premier numéro de téléphone (724) ; et
répéter la boucle jusqu'à ce qu'un dernier numéro de téléphone de la première liste soit ajouté à la base de données de contacts générés par code à réponse rapide ou soit rejeté.

3. Support ou supports non transitoires lisibles par ordinateur selon la revendication 1, comprenant des instructions pour :
permettre à l'utilisateur de sélectionner un premier numéro de téléphone reformaté à appeler ou auquel envoyer un message texte (802), dans lesquels le premier numéro de téléphone reformaté est une première concaténation d'un premier indicatif de pays de l'Organisation internationale de normalisation pour un pays et d'un premier numéro de téléphone local dans le pays ;
déterminer si un troisième critère est satisfait (804), dans lesquels le troisième critère est satisfait lorsque le premier indicatif de pays de l'Organisation internationale de normalisation pour le pays est identique à un deuxième indicatif de pays de l'Organisation internationale de normalisation pour le pays actuel,
dans lesquels si le troisième critère est satisfait,
lancer la séquence logique d'appel national (806) ;
afficher une deuxième concaténation d'un protocole de numérotation interne et du premier numéro de téléphone local (808) ;
procéder de manière à déterminer si un quatrième critère est satisfait ;
dans lesquels si le troisième critère n'est pas satisfait,
lancer la séquence logique d'appel international (818) ;
afficher une troisième concaténation d'un protocole de numérotation externe et du premier numéro de téléphone local (820) ;
déterminer si un quatrième critère est satisfait (810), dans lesquels le quatrième critère est satisfait lorsque l'utilisateur effectue un appel téléphonique,
dans lesquels si le quatrième critère est satisfait,
permettre à l'utilisateur de composer la deuxième concaténation lorsque la séquence logique d'appel national est lancée ou la troisième concaténation lorsque la séquence logique d'appel international est lancée (812) ;
enregistrer le premier numéro de téléphone reformaté dans le journal des appels sur le dispositif de communication (814) ;
lancer l'appel téléphonique (816) ;
dans lesquels si le quatrième critère n'est pas satisfait,
ouvrir une application de texte par défaut sur le dispositif de communication (822) ;
permettre à l'utilisateur de taper un message texte (824) ; et envoyer le message texte (826).

4. Support ou supports non transitoires lisibles par ordinateur selon la revendication 3, comprenant des instructions pour :
permettre à l'utilisateur de sélectionner un deuxième numéro de téléphone reformaté à appeler ou auquel envoyer un message texte, dans lesquels le deuxième numéro de téléphone reformaté est une quatrième concaténation d'un troisième indicatif de pays de l'Organisation internationale de normalisation pour un premier pays et d'un deuxième numéro de téléphone local dans le premier pays ;
établir que le troisième indicatif de pays de l'Organisation internationale de normalisation pour le premier pays correspond au deuxième indicatif de pays de l'Organisation internationale de normalisation pour le pays actuel ;
lancer la séquence logique d'appel national ;
déterminer si un cinquième critère est satisfait (902), dans lesquels le cinquième critère est satisfait lorsque le premier pays utilise un indicatif d'opérateur national,
dans lesquels si le cinquième critère est satisfait,
déterminer si un sixième critère est satisfait (904), dans lesquels le sixième critère est satisfait lorsque l'utilisateur a désigné un opérateur par défaut,
dans lesquels si le sixième critère est satisfait,
procéder de manière à déterminer si un septième critère est satisfait ;
dans lesquels si le sixième critère n'est pas satisfait,
inviter l'utilisateur à sélectionner l'opérateur par défaut (906) ;
déterminer si un septième critère est satisfait (908), dans lesquels le septième critère est satisfait lorsque l'opérateur par défaut utilise une logique différente pour les appels ou messages textuels intra-villes et les appels ou messages textuels intervilles,
dans lesquels si le septième critère est satisfait,
déterminer si un huitième critère est satisfait (910), dans lesquels le huitième critère est satisfait lorsqu'un numéro de téléphone intra-ville est appelé ou reçoit un message texte,
dans lesquels si le huitième critère est satisfait,
extraire un indicatif intra-ville d'une base de données contenant des indicatifs de région et des préfixes (912) ;
capturer l'indicatif intra-ville, dans lesquels un indicatif intra-ville capturé est obtenu ;
procéder de manière à authentifier le deuxième numéro de téléphone local ;
dans lesquels si le huitième critère n'est pas satisfait,
extraire un indicatif interville de la base de données contenant des indicatifs de région et des préfixes (914) ;
capturer l'indicatif interville, dans lesquels un indicatif interville capturé est obtenu ;
procéder de manière à authentifier le deuxième numéro de téléphone local ;
dans lesquels si le septième critère n'est pas satisfait,
capturer un indicatif d'opérateur par défaut (916), dans lesquels un indicatif d'opérateur par défaut capturé est obtenu ;
procéder de manière à authentifier le deuxième numéro de téléphone local ;
dans lesquels si le cinquième critère n'est pas satisfait,
déterminer si un neuvième critère est satisfait (918), dans lesquels le neuvième critère est satisfait lorsque le premier pays utilise un préfixe interurbain,
dans lesquels si le neuvième critère est satisfait,
déterminer si un dixième critère est satisfait (920), dans lesquels le dixième critère est satisfait lorsque le préfixe interurbain est différent pour les appels ou les messages textuels vers des dispositifs mobiles et les appels ou les messages textuels vers des lignes fixes,
dans lesquels si le dixième critère est satisfait,
capturer un préfixe de dispositif mobile ou un préfixe de ligne fixe à partir de la base de données contenant des indicatifs de région et des préfixes (926), dans lesquels un préfixe de dispositif mobile capturé ou un préfixe de ligne fixe capturé est obtenu ;
procéder de manière à authentifier le deuxième numéro de téléphone local ;
dans lesquels si le dixième critère n'est pas satisfait,
déterminer si un onzième critère est satisfait (924), dans lesquels le onzième critère est satisfait lorsque le premier pays utilise un indicatif interurbain plus attente à un seul chiffre,
dans lesquels si le onzième critère est satisfait,
capturer l'indicatif interurbain plus attente à un seul chiffre à partir de la base de données contenant des indicatifs de région et des préfixes et dans lesquels un indicatif interurbain plus attente à un seul chiffre capturé est obtenu ;
programmer l'indicatif interurbain plus attente à un seul chiffre pour mettre en pause la numérotation pendant cinq secondes (928) ;
procéder de manière à authentifier le deuxième numéro de téléphone local ;
dans lesquels si le onzième critère n'est pas satisfait,
capturer le préfixe interurbain à partir de la base de données contenant des indicatifs de région et des préfixes (930), dans lesquels un préfixe interurbain capturé est obtenu ;
procéder de manière à authentifier le deuxième numéro de téléphone local ;
dans lesquels si le neuvième critère n'est pas satisfait,
authentifier le deuxième numéro de téléphone local (932) ;
déterminer si un douzième critère est satisfait (934), dans lesquels le douzième critère est satisfait lorsque le deuxième numéro de téléphone local réussit un premier test de vérification pour le premier pays,
dans lesquels si le douzième critère est satisfait,
déterminer si un treizième ensemble de critères est satisfait (936), dans lesquels le treizième ensemble de critères est satisfait lorsque le deuxième numéro de téléphone local est conforme à une règle de minimum et à une règle de maximum pour le premier pays,
dans lesquels si le treizième ensemble de critères est satisfait,
reconnaître que le deuxième numéro de téléphone local est authentifié, dans lesquels un deuxième numéro de téléphone local authentifié est obtenu ;
concaténer un indicatif ou préfixe capturé et le deuxième numéro de téléphone local authentifié (940), dans lesquels une concaténation nationale est obtenue, et dans lesquels l'indicatif ou préfixe capturé est l'indicatif intra-ville capturé, l'indicatif interville capturé, l'indicatif d'opérateur par défaut capturé, le préfixe de dispositif mobile capturé, le préfixe de ligne fixe capturé, l'indicatif interurbain plus attente à un seul chiffre capturé, ou le préfixe interville capturé ;
procéder de manière à déterminer si un quatorzième critère est satisfait ;
dans lesquels si le treizième ensemble de critères n'est pas satisfait, réinitialiser un numéroteur ;
dans lesquels si le douzième critère n'est pas satisfait,
réinitialiser le numéroteur (938) ;
déterminer si un quatorzième critère est satisfait (942), dans lesquels le quatorzième critère est satisfait lorsque l'utilisateur lance un premier appel téléphonique,
dans lesquels si le quatorzième critère est satisfait,
afficher une ville de destination pour le deuxième numéro de téléphone local authentifié (944) ;
permettre à l'utilisateur de composer la concaténation nationale à l'aide d'une application de téléphone par défaut sur le dispositif de communication (946) ;
enregistrer le deuxième numéro de téléphone reformaté dans le journal des appels sur le dispositif de communication (948) ;
lancer le premier appel téléphonique (950) ;
dans lesquels si le quatorzième critère n'est pas satisfait,
ouvrir l'application de texte par défaut sur le dispositif de communication et afficher la concaténation domestique (952) ;
permettre à l'utilisateur de taper un premier message texte (954) ; et
envoyer le premier message texte (956).

5. Support ou supports non transitoires lisibles par ordinateur selon la revendication 3, comprenant des instructions pour :
permettre à l'utilisateur de sélectionner un troisième numéro de téléphone reformaté à appeler ou auquel envoyer un message texte, dans lesquels le troisième numéro de téléphone reformaté est une cinquième concaténation d'un quatrième indicatif de pays de l'Organisation internationale de normalisation pour un deuxième pays et d'un troisième numéro de téléphone local dans le deuxième pays ;
établir que le quatrième indicatif de pays de l'Organisation internationale de normalisation pour le deuxième pays ne correspond pas au deuxième indicatif de pays de l'Organisation internationale de normalisation pour le pays actuel (1002) ;
lancer la séquence logique d'appel international (1004) ;
déterminer si un quinzième critère est satisfait (1006), dans lesquels le quinzième critère est satisfait lorsque le pays actuel et le deuxième pays sont dans une même alliance de télécommunications,
dans lesquels si le quinzième critère est satisfait,
utiliser une logique de règle d'alliance pour capturer un indicatif de région d'alliance à partir de la base de données contenant des indicatifs de région et des préfixes (1008), dans lesquels un indicatif de région d'alliance capturé est obtenu et dans lesquels l'indicatif de région d'alliance capturé est une première chaîne de protocole de numérotation externe ;
procéder de manière à permettre à l'utilisateur de composer le troisième numéro de téléphone local ;
dans lesquels si le quinzième critère n'est pas satisfait,
déterminer si un seizième critère est satisfait (1010), dans lesquels le seizième critère est satisfait lorsque le pays actuel utilise un indicatif d'opérateur international, dans lesquels si le seizième critère est satisfait,
capturer l'indicatif d'opérateur international à partir de la base de données contenant des indicatifs de région et des préfixes (1012), dans lesquels un indicatif d'opérateur international capturé est obtenu ;
procéder de manière à déterminer si un dix-huitième critère est satisfait ;
dans lesquels si le seizième critère n'est pas satisfait,
déterminer si un dix-septième critère est satisfait (1014), dans lesquels le dix-septième critère est satisfait lorsque le pays actuel utilise un premier indicatif interurbain plus attente à un seul chiffre suivi d'un indicatif de sortie pour le pays actuel,
dans lesquels si le dix-septième critère est satisfait,
capturer le premier indicatif interurbain plus attente à un seul chiffre et l'indicatif de sortie à partir de la base de données contenant des indicatifs de région et des préfixes (1016), dans lesquels un premier indicatif interurbain plus attente à un seul chiffre et l'indicatif de sortie capturés sont obtenus ;
programmer le premier indicatif interurbain plus attente à un seul chiffre capturé pour suspendre la numérotation pendant cinq secondes ;
procéder de manière à déterminer si un dix-huitième critère est satisfait ;
dans lesquels si le dix-septième critère n'est pas satisfait,
capturer l'indicatif de sortie pour le pays actuel à partir de la base de données contenant des indicatifs de région et des préfixes (1018), dans lesquels un indicatif de sortie capturé est obtenu ;
déterminer si un dix-huitième critère est satisfait (1020), dans lesquels le dix-huitième critère est satisfait lorsque le deuxième pays utilise des indicatifs d'entrée différents pour les dispositifs mobiles et les lignes fixes,
dans lesquels si le dix-huitième critère est satisfait,
capturer un indicatif d'entrée pour le deuxième pays à partir de la base de données contenant des indicatifs de région et des préfixes (1022) ;
concaténer un protocole de numérotation externe de pays actuel, l'indicatif d'entrée et un indicatif d'entrée de dispositif mobile ou un indicatif d'entrée de ligne fixe, dans lesquels une deuxième chaîne de protocole de numérotation externe est obtenue et dans lesquels le protocole de numérotation externe de pays actuel est l'indicatif d'opérateur international capturé, le premier indicatif interurbain plus attente à un seul chiffre capturé et l'indicatif de sortie ou l'indicatif de sortie capturé (1022) ;
procéder de manière à permettre à l'utilisateur de composer le troisième numéro de téléphone local ;
dans lesquels si le dix-huitième critère n'est pas satisfait,
concaténer le protocole de numérotation externe du pays actuel et l'indicatif d'entrée (1024), dans lesquels une troisième chaîne de protocole de numérotation externe est obtenue ;
permettre à l'utilisateur de composer le troisième numéro de téléphone local (1026), dans lesquels un troisième numéro de téléphone local composé est obtenu ;
authentifier le troisième numéro de téléphone local composé ;
déterminer si un dix-neuvième critère est satisfait (1028), dans lesquels le dix-neuvième critère est satisfait lorsque le troisième numéro de téléphone local composé réussit un deuxième test de vérification pour le deuxième pays,
dans lesquels si le dix-neuvième critère est satisfait,
déterminer si un vingtième ensemble de critères est satisfait (1030), dans lesquels le vingtième ensemble de critères est satisfait lorsque le troisième numéro de téléphone local composé est conforme à une première règle de minimum et à une première règle de maximum pour le deuxième pays,
dans lesquels si le vingtième ensemble de critères est satisfait,
reconnaître que le troisième numéro de téléphone local est authentifié, dans lesquels un troisième numéro de téléphone local authentifié est obtenu ;
concaténer une chaîne de protocole de numérotation externe et le troisième numéro de téléphone local authentifié (1034), dans lesquels une concaténation internationale est obtenue et dans lesquels la chaîne de protocole de numérotation externe est la première chaîne de protocole de numérotation externe, la deuxième chaîne de protocole de numérotation externe, ou la troisième chaîne de protocole de numérotation externe ;
procéder de manière à déterminer si un vingt-et-unième critère est satisfait ;
dans lesquels si le vingtième ensemble de critères n'est pas satisfait,
établir qu'un numéro de téléphone incorrect a été composé ;
réinitialiser le numéroteur (1032) ;
revenir pour permettre à l'utilisateur de composer le troisième numéro de téléphone local ; dans lesquels si le dix-neuvième critère n'est pas satisfait,
établir qu'un premier numéro de téléphone incorrect a été composé ;
réinitialiser le numéroteur (1032) ;
revenir pour permettre à l'utilisateur de composer le troisième numéro de téléphone local ;
déterminer si un vingt-et-unième critère est satisfait (1036), dans lesquels le vingt-et-unième critère est satisfait lorsque l'utilisateur lance un deuxième appel téléphonique, dans lesquels si le vingt-et-unième critère est satisfait,
afficher une première ville de destination pour le troisième numéro de téléphone local authentifié (1038) ;
permettre à l'utilisateur de composer la concaténation internationale à l'aide de l'application de téléphone par défaut sur le dispositif de communication (1040) ;
enregistrer le troisième numéro de téléphone reformaté dans le journal des appels sur le dispositif de communication (1042) ;
lancer le deuxième appel téléphonique (1044) ;
dans lesquels si le vingt-et-unième critère n'est pas satisfait,
ouvrir l'application de texte par défaut sur le dispositif de communication et afficher la concaténation internationale (1046) ;
permettre à l'utilisateur de taper un deuxième message texte (1048) ; et
envoyer le deuxième message texte (1050).

6. Support ou supports non transitoires lisibles par ordinateur selon la revendication 5, comprenant des instructions pour :
lancer la logique de règle d'alliance ;
identifier une alliance de télécommunications commune en comparant un enregistrement pour le pays actuel et un premier enregistrement pour un troisième pays dans la base de données contenant des indicatifs de région et des préfixes (1102) ;
capturer un premier indicatif de région d'alliance à partir du premier enregistrement pour le troisième pays (1104), dans lesquels un premier indicatif de région d'alliance capturé est obtenu ;
permettre à l'utilisateur de composer un quatrième numéro de téléphone local dans le troisième pays (1106), dans lesquels un quatrième numéro de téléphone local composé est obtenu ;
authentifier le quatrième numéro de téléphone local composé ;
déterminer si un vingt-deuxième critère est satisfait (1108), dans lesquels le vingt-deuxième critère est satisfait lorsque le quatrième numéro de téléphone local composé passe un troisième test de vérification pour le troisième pays,
dans lesquels si le vingt-deuxième critère est satisfait,
déterminer si un vingt-troisième ensemble de critères est satisfait (1110), dans lesquels le vingt-troisième ensemble de critères est satisfait lorsque le quatrième numéro de téléphone local composé est conforme à une deuxième règle de minimum et à une deuxième règle de maximum pour le troisième pays ;
dans lesquels si le vingt-troisième ensemble de critères est satisfait,
reconnaître que le quatrième numéro de téléphone local est authentifié, dans lesquels un quatrième numéro de téléphone local authentifié est obtenu ;
concaténer le premier indicatif de région d'alliance capturé et le quatrième numéro de téléphone local authentifié, dans lesquels une concaténation d'alliance est obtenue ;
procéder de manière à déterminer si un vingt-quatrième critère est satisfait ;
dans lesquels si le vingt-troisième ensemble de critères n'est pas satisfait,
établir qu'un deuxième numéro de téléphone incorrect a été composé ; réinitialiser le numéroteur ;
revenir pour permettre à l'utilisateur de composer le quatrième numéro de téléphone local ;
dans lesquels si le vingt-deuxième critère n'est pas satisfait,
établir qu'un troisième numéro de téléphone incorrect a été composé ;
réinitialiser le numéroteur (1112) ;
revenir pour permettre à l'utilisateur de composer le quatrième numéro de téléphone local ;
déterminer si un vingt-quatrième critère est satisfait (1114), dans lesquels le vingt-quatrième critère est satisfait lorsque l'utilisateur lance un troisième appel téléphonique,
dans lesquels si le vingt-quatrième critère est satisfait,
afficher une deuxième ville de destination pour le quatrième numéro de téléphone local authentifié (1116) ;
permettre à l'utilisateur de composer la concaténation d'alliance à l'aide de l'application téléphonique par défaut sur le dispositif de communication (1118) ;
enregistrer un quatrième numéro de téléphone reformaté dans le journal des appels sur le dispositif de communication (1120), dans lesquels le quatrième numéro de téléphone reformaté contient le quatrième numéro de téléphone local dans le troisième pays ;
lancer le troisième appel téléphonique vers la concaténation d'alliance (1122) ;
dans lesquels si le vingt-quatrième critère n'est pas satisfait,
ouvrir l'application de texte par défaut sur le dispositif de communication et afficher la concaténation d'alliance (1124) ;
permettre à l'utilisateur de taper un troisième message texte (1126) ; et
envoyer le troisième message texte à la concaténation d'alliance (1128).
